# EUROPEAN PATENT APPLICATION

(11) **EP 4 836 549 A1**
(43) Date of publication of application: **04.11.2026**
(21) Application number: 23962620.3
(22) Date of filing: 27.12.2023
(51) Int. Cl.: H04W 64/00

(54) **SIGNAL PROCESSING METHOD AND APPARATUS, AND DEVICE, STORAGE MEDIUM AND CHIP**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: RGTH
(86) International application number: PCT/CN2023/142369
(87) International publication number: WO 2025/137932

(57) **Abstract**

A signal processing method and apparatus, and a device, a storage medium and a chip, which belong to the technical field of mobile communications. The method is executed by a positioning device and comprises: receiving positioning signals transmitted by one or more ambient energy Internet of Things devices (701); and on the basis of the positioning signals, acquiring the distance between the positioning device and each ambient energy Internet of Things device (702), wherein the distance between the positioning device and each ambient energy Internet of Things device is configured to position the positioning device.

## Description

### TECHNICAL FIELD

The present application relates to the field of mobile communication technology, and more particularly, to a signal processing method and apparatus, a device, a storage medium and a chip.

### BACKGROUND

With the continuous development of mobile communication technology, the demand for positioning based on mobile communications has progressively increased.

In the related art, positioning between two terminals can be performed through the Internet of Things or a cellular network. For instance, two terminals within the Internet of Things or the cellular network establish an Internet of Things or a cellular connection, and then perform signal reception and detection through the Internet of Things or the cellular connection, to achieve applications such as absolute positioning, relative positioning, ranging and direction finding.

### SUMMARY

Embodiments of the present application provide a signal processing method and apparatus, a device, a storage medium and a chip. The technical solutions are as follows.

In one aspect, the embodiments of the present application provide a signal processing method, which is performed by a positioning device and includes:
receiving a positioning signal transmitted by one or more ambient Internet of Things devices; and
obtaining a distance between the positioning device and the ambient Internet of Things device according to the positioning signal, where the distance between the positioning device and the ambient Internet of Things device is used for positioning the positioning device.

In one aspect, the embodiments of the present application provide a signal processing method, which is performed by an ambient Internet of Things device and includes:
transmitting a positioning signal to a positioning device, to enable the positioning device to obtain a distance between the positioning device and the ambient Internet of Things device according to the positioning signal, where the distance between the positioning device and the ambient Internet of Things device is used for positioning the positioning device.

In another aspect, the embodiments of the present application provide a signal processing apparatus, and the apparatus includes:
a receiving module, configured to receive a positioning signal transmitted by one or more ambient Internet of Things devices; and
a distance obtaining module, configured to obtain a distance between the positioning device and the ambient Internet of Things device according to the positioning signal, where the distance between the positioning device and the ambient Internet of Things device is used for positioning the positioning device.

In another aspect, the embodiments of the present application provide a signal processing apparatus, and the apparatus includes:
a transmitting module, configured to transmit a positioning signal to a positioning device, to enable the positioning device to obtain a distance between the positioning device and an ambient Internet of Things device according to the positioning signal, where the distance between the positioning device and the ambient Internet of Things device is used for positioning the positioning device.

In another aspect, the embodiments of the present application provide a positioning device, where the positioning device includes a processor, a memory and a transceiver;
the memory is configured to store a computer program, and the processor is configured to execute the computer program, to cause the terminal device to implement the above signal processing method performed by the positioning device.

In another aspect, the embodiments of the present application provide an ambient Internet of Things device, where the ambient Internet of Things device includes a processor, a memory and a transceiver;
the memory is configured to store a computer program, and the processor is configured to execute the computer program, to cause the ambient Internet of Things device to implement the above signal processing method performed by the ambient Internet of Things device.

In yet another aspect, the embodiments of the present application also provide a computer-readable storage medium having a computer program stored thereon, where the computer program, when loaded and executed by a processor, implements the above signal processing methods.

In yet another aspect, the present application also provides a chip, and the chip is configured to operate in a communication device, to cause the communication device to perform the above signal processing methods.

In yet another aspect, the present application provides a computer program product, which includes computer instructions stored on a computer-readable storage medium. A processor of a communication device reads the computer instructions from the computer-readable storage medium and executes the computer instructions, to cause the communication device to perform the above signal processing methods.

In yet another aspect, the present application provides a computer program, and the computer program is executed by a processor of a communication device, to implement the above signal processing methods.

The embodiments of the present application provide a signal processing solution for positioning. The positioning device can calculate the distance between the positioning device and the ambient Internet of Things device based on the positioning signal transmitted by the ambient Internet of Things device, so that positioning of the positioning device is achieved, thereby expanding the application scenarios of positioning functions and improving positioning performance.

### BRIEF DESCRIPTION OF THE DRAWINGS

To more clearly illustrate the technical solutions in the embodiments of the present application, accompanying drawings required in the description of the embodiments will be briefly introduced below. It is apparent that the accompanying drawings described below are merely some embodiments of the present application. For those skilled in the art, other drawings can also be obtained according to these accompanying drawings without creative effort.
FIG. 1 is a schematic architecture diagram of a communication system provided by an embodiment of the present application.
FIG. 2 is a principle diagram of zero-power communication related to the present application.
FIG. 3 is a principle diagram of radio frequency power harvesting related to the present application.
FIG. 4 is a principle diagram of backscattering communication related to the present application.
FIG. 5 is a circuit principle diagram of resistive load modulation related to the present application.
FIG. 6 is a schematic diagram of backscattering communication related to the present application.
FIG. 7 is a flowchart of a signal processing method provided by an embodiment of the present application.
FIG. 8 is a flowchart of a signal processing method provided by an embodiment of the present application.
FIG. 9 is a flowchart of a signal processing method provided by an embodiment of the present application.
FIG. 10 is a schematic diagram of a communication between a target device and anchor devices related to the present application.
FIG. 11 is a schematic diagram of another communication between a target device and anchor devices related to the present application.
FIG. 12 is a schematic diagram of a target device generating radio frequency signals of different frequencies related to the present application.
FIG. 13 is a schematic diagram of transmission processing of signals of different frequencies related to the present application.
FIG. 14 is a schematic diagram of a frequency-domain offset of a backscatter signal related to the present application.
FIG. 15 is a schematic diagram of an anchor device generating radio frequency signals of different frequencies related to the present application.
FIG. 16 is a schematic diagram of an anchor device obtaining backscatter signals of different frequencies related to the present application.
FIG. 17 is a schematic diagram of a time-domain offset of a backscatter signal related to the present application.
FIG. 18 is a schematic diagram of a target device simultaneously transmitting radio frequency signals to multiple anchor devices related to the present application.
FIG. 19 is a schematic diagram of a target device scheduling backscattering by an anchor device related to the present application.
FIG. 20 is a block diagram of a signal processing apparatus provided by an embodiment of the present application.
FIG. 21 is a block diagram of a signal processing apparatus provided by an embodiment of the present application.
FIG. 22 is a schematic structural diagram of a communication device provided by an embodiment of the present application.

### DETAILED DESCRIPTION

To make the objectives, technical solutions and advantages of the present application clearer, the implementations of the present application will be further described in detail below with reference to the accompanying drawings.

The network architecture and service scenarios described in the embodiments of the present application are intended to illustrate the technical solutions of the embodiments of the present application more clearly and do not constitute a limitation on the technical solutions provided in the embodiments of the present application. A person of ordinary skill in the art will appreciate that, with the evolution of network architectures and the emergence of new service scenarios, the technical solutions provided in the embodiments of the present application are equally applicable to similar technical problems.

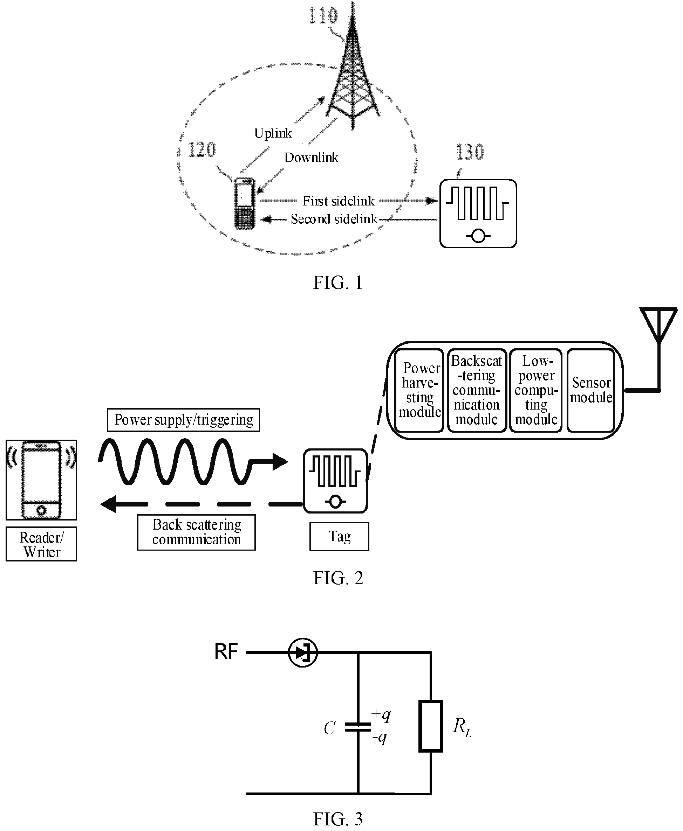

FIG. 1 illustrates a schematic diagram of a communication system related to an exemplary embodiment of the present application. The communication system includes a network device 110, a terminal device 120 and an ambient Internet of Things device 130, which are not limited in the present application.

The network device 110 in the present application provides wireless communication functions. The network device 110 includes, but is not limited to, an evolved node B (eNB), a radio network controller (RNC), a node B (NB), a base station controller (BSC), a base transceiver station (BTS), a home base station (e.g., a home evolved node B or home node B, HNB), a baseband unit (BBU), an access point (AP), a wireless relay node, a wireless backhaul node, a transmission point (TP) or a transmission and reception point (TRP) in a wireless fidelity (Wi-Fi) system. The network device 110 may also be a next generation node B (gNB) or transmission point (TRP or TP) in a 5th Generation (5G) mobile communication system, or one or a group of antenna panels (including multiple antenna panels) of a base station in a 5G system, or a network node constituting a gNB or transmission point, such as a BBU or a distributed unit (DU); or a base station in a beyond fifth generation (B5G) or 6th Generation (6G) mobile communication system, or a core network (CN), fronthaul, backhaul, a radio access network (RAN), a network slice; or a serving cell, a primary cell (PCell), a primary secondary cell (PSCell), a special cell (SpCell), a secondary cell (SCell) or a neighbor cell of a terminal device.

The terminal device 120 in the present application, also referred to as a user equipment (UE), an access terminal, a user unit, a user station, a mobile station, a mobile terminal, a remote station, a remote terminal, a mobile device, a user terminal, a terminal, a wireless communication device, a user agent or a user apparatus. The terminal includes, but is not limited to, a handheld device, a wearable device, a vehicle-mounted device and an Internet of Things devices, such as, a mobile phone, a tablet computer, an e-book reader, a laptop computer, a desktop computer, a television, a gaming console, a mobile internet device (MID), an augmented reality (AR) terminal, a virtual reality (VR) terminal and a mixed reality (MR) terminal, a wearable device, a hand shank, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home (such as a smart TV, router, smart speaker, and so on), a wireless terminal in remote medical surgery, a cellular phone, a cordless phone, a session initiation protocol (SIP) phone, a wireless local loop (WLL) station, a personal digital assistant (PDA), a set top box (STB), a customer premise equipment (CPE).

The network device 110 and the terminal device 120 communicate with each other through a certain air interface technology, such as a Uu interface.

Exemplarily, there are two communication scenarios between the network device 110 and the terminal device 120: an uplink communication scenario and a downlink communication scenario. Uplink communication refers to transmitting signals to the network device 110, while downlink communication refers to transmitting signals to the terminal device 120.

The terminal device 120 can communicate with other terminal devices through a certain air interface technology, such as a PC5 interface.

In some embodiments, there are two communication scenarios between the terminal device 120 and other terminal devices: a first sidelink communication scenario and a second sidelink communication scenario. First sidelink communication refers to transmitting signals to other terminal devices, while second sidelink communication refers to transmitting signals to the terminal device 120.

The terminal device 120 and other terminal devices are all within network coverage and located in the same cell, or the terminal device 120 and other terminal devices are all within network coverage but located in different cells, or the terminal device 120 is within network coverage while other terminal devices are outside network coverage.

The ambient Internet of Things device 130 is a zero-power device based on radio frequency identification (RFID).

An ambient Internet of Things device refers to a device that utilizes various forms of ambient energy, such as radio frequency energy, light energy, solar energy, thermal energy and mechanical energy. Such a device may have no energy storage capability or may possess a very limited energy storage capability (e.g., using a capacitor with a capacitance of several tens of uF).

In some embodiments, the ambient Internet of Things device may form a zero-power Internet of Things (Ambient power enabled IoT), also referred to as Ambient IoT for short.

The technical solutions provided in the embodiments of the present application may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, a LTE frequency division duplex (FDD) system, a LTE time division duplex (TDD) system, an advanced long term evolution (LTE-A) system, a universal mobile telecommunication system (UMTS) system, a worldwide interoperability for microwave access (WiMAX) communication system, a 5G mobile communication system, a new radio (NR) system, an evolved system of NR, a LTE-based access to unlicensed spectrum (LTE-U) system, an NR-based access to unlicensed spectrum (NR-U) system, a terrestrial network (TN) system, a non-terrestrial network (NTN) system, wireless local area networks (WLAN), wireless fidelity (Wi-Fi), a cellular Internet of Things system, and a cellular passive Internet of Things system. The technical solutions are also applicable to subsequent evolved systems of 5G NR, as well as B5G, 6G and their subsequent evolved systems. In some embodiments of the present application, "NR" may also be referred to as the 5G NR system or 5G system. The 5G mobile communication system may include non-standalone (NSA) networking and/or standalone (SA) networking.

The technical solutions provided in the embodiments of the present application may also be applied to machine type communication (MTC), long term evolution-machine (LTE-M), device-to-device (D2D) networks, machine-to-machine (M2M) networks, Internet of Things (IoT) networks or other networks. The IoT network may, for example, include the Internet of Vehicles. The communication mode in an Internet of Vehicles system is generally referred to as vehicle-to-everything (V2X), where X can represent anything. For example, V2X may include vehicle-to-vehicle (V2V) communication, vehicle-to-infrastructure (V2I) communication, vehicle-to-pedestrian (V2P) communication, vehicle-to-network (V2N) communication or the like.

Before introducing the technical solutions of the present application, some background technical knowledge related to the present application will be described. The following related technologies, as optional solutions, can be arbitrarily combined with the technical solutions of the embodiments of the present application, and all such combinations fall within the protection scope of the embodiments of the present application. The embodiments of the present application include at least part of the following content.

### 1) Zero-Power Communication

Zero-power communication adopts technologies of power harvesting and backscattering communication. A zero-power communication network is composed of a network device and a zero-power device. As illustrated in FIG. 2, a principle diagram of zero-power communication related to the present application is illustrated. The network device is used to transmit a radio power supply signal and a downlink communication signal to the zero-power device, and receive a backscattering signal of the zero-power device. A basic zero-power device includes a power harvesting module, a backscattering communication module and a low-power computing module. In addition, the zero-power device may also be provided with a memory or a sensor for storing some basic information (such as, item identification) or obtaining sensing data such as ambient temperature and ambient humidity.

The key technologies of zero-power communication mainly include radio frequency power harvesting and backscattering communication.

### - Radio Frequency (RF) Power Harvesting

Referring to FIG. 3, a principle diagram of radio frequency power harvesting related to the present application is illustrated. As illustrated in FIG. 3, a radio frequency power harvesting module achieves harvesting electromagnetic wave energy in space based on the principle of electromagnetic induction, and then obtains energy required for driving a zero-power device to work, such as, for driving a low-power demodulation and modulation module, a sensor and memory access. Therefore, the zero-power device does not require traditional batteries.

### -Back Scattering Communication

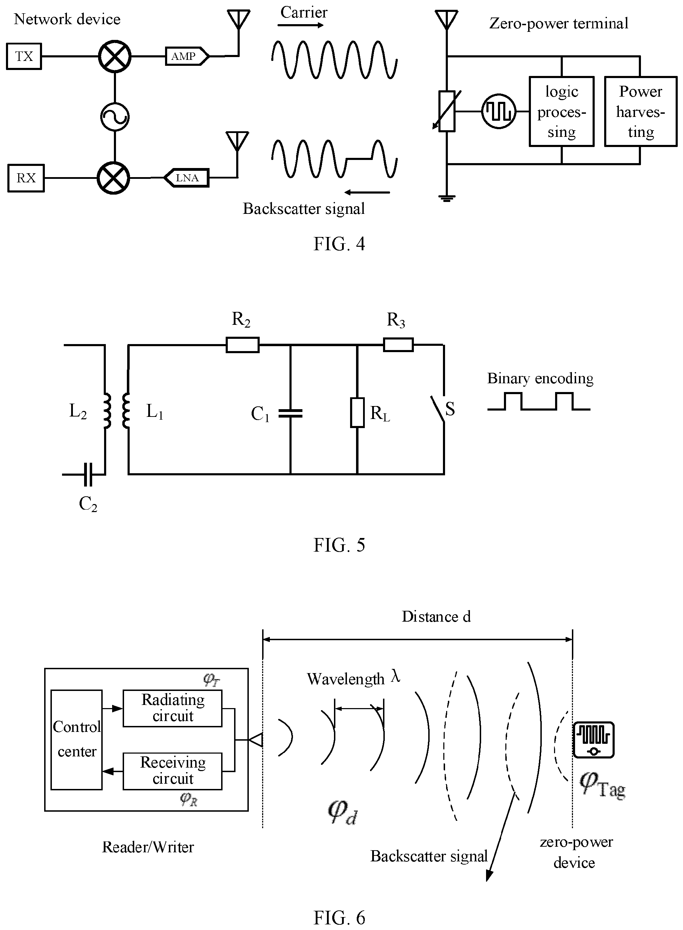

Referring to FIG. 4, a principle diagram of backscattering communication related to the present application is illustrated. As illustrated in FIG. 4, a zero-power communication terminal receives a wireless signal transmitted by a network, modulates the wireless signal, loads information to be transmitted and radiates the modulated signal from an antenna. This information transmission process is referred to as backscattering communication. Backscattering and load modulation functions are inseparable. Load modulation adjusts and controls circuit parameters of an oscillation loop of the zero-power device according to the rhythm of data stream, so that parameters such as impedance of an electronic tag change accordingly, thereby completing the modulation process. A load modulation technology mainly includes two manners: resistive load modulation and capacitive load modulation. In resistive load modulation, a resistor is connected in parallel with a load, and the resistor is switched on or off based on the control of the binary data stream. As illustrated in FIG. 5, a circuit principle diagram of resistive load modulation related to the present application is illustrated. On and off of the resistor will cause the circuit voltage to change, thus realizing amplitude-shift keying (ASK), that is, the modulation and transmission of the signal is achieved by adjusting the amplitude of the backscattering signal of the zero-power device. Similarly, in capacitive load modulation, resonant frequencies of a circuit may be changed by switching a capacitor on and off, thus realizing frequency-shift keying (FSK), that is, the modulation and transmission of the signal is achieved by adjusting an operating frequency of the backscattering signal of the zero-power device.

It can be seen that the zero-power device performs information modulation on an incoming wave signal by means of load modulation, thereby realizing the backscattering communication process. Therefore, the zero-power device has the following significant advantages.
(1) A terminal does not actively transmit a signal, so the terminal does not need complex radio frequency links, such as a power amplifier (PA) or a radio frequency filter.
(2) A terminal does not need to actively generate a high-frequency signal, and therefore does not need high-frequency crystal oscillators.
(3) With the help of backscattering communication, a signal transmission of a terminal does not need to consume the energy of the terminal itself.

### - Encoding

Data transmitted by an electronic tag may use different forms of codes to represent binary "1" and "0". A radio frequency identification system usually uses one of the following encoding manners: reverse Non Return Zero (NRZ) encoding, Manchester encoding, unipolar RZ encoding, differential Binary Phase (DBP) encoding, Miller encoding, differential encoding and so on. In simple terms, different pulse signals are used to represent 0 and 1.

### 2) Classification of Zero-Power Terminal

Based on the energy source and usage of zero-power terminals, the terminals can be classified into the following types.

### a) Passive zero-power terminal

A zero-power terminal does not require a built-in battery. When the zero-power terminal approaches a network device (such as a Reader/Writer in an RFID system), the zero-power terminal is within a near-field range formed by antenna radiation of the network device. Therefore, an antenna of the zero-power terminal generates an induced current through electromagnetic induction, and the induced current drives a low-power chip circuit of the zero-power terminal, which realizes demodulation for a forward link signal and modulation for a backward link signal. For the backward link, the zero-power terminal transmits signals by means of backscattering or low-power active transmission.

It can be seen that the passive zero-power terminal does not require a built-in battery to drive either the forward link or the reverse link, and is a true zero-power terminal.

Since the passive zero-power terminal does not require batteries, a radio frequency circuit and baseband circuit are very simple, for example, there is no need for devices such as a low noise amplifier (LNA), a power amplifier (PA), a crystal oscillator or an analog-to-digital converter (ADC). Therefore, the passive zero-power terminal has many advantages such as small size, light weight, very cheap price and long service life.

The passive zero-power terminal can also support other power harvesting methods. By harvesting energy from the environment (such as light energy, heat energy, kinetic energy or mechanical energy), the energy for driving the circuit is obtained, thereby supporting the terminal device in communication.

### b) Semi-passive zero-power terminal

A semi-passive zero-power terminal itself is also not equipped with a conventional battery, but may use an RF power harvesting module to harvest radio wave energy or use a power harvesting module to harvest energy from the environment (such as solar energy, thermal energy, mechanical vibration energy), and then, store harvested energy in an energy storage unit (such as a capacitor). After obtaining the energy, the energy storage unit may drive the low-power chip circuit of the zero-power terminal, which realizes demodulation for the forward link signal and modulation for the backward link signal. For the backward link, the zero-power terminal transmits signals by means of backscattering or low-power active transmission.

It can be seen that the semi-passive zero-power terminal does not require a built-in battery to drive either the forward link or the reverse link. Although energy stored in the capacitor is used during operation, the energy comes from the radio energy harvested by the power harvesting module. Therefore, it is also a true zero-power terminal.

The semi-passive zero-power terminal inherits many advantages of the passive zero-power terminal, and therefore, it has many advantages such as small size, light weight, very cheap price and long service life.

### c) Active zero-power terminal

In some scenarios, the zero-power terminal used may also be an active zero-power terminal, and such a terminal may have a built-in battery. The battery is used to drive the low-power chip circuit of the zero-power terminal to realize demodulation of the forward link signal and the modulation of the reverse link signal. However, for a backscattering link, the zero-power terminal transmits signals by means of backscattering or active transmission. Although it has a built-in battery, this type of active zero-power terminal has extremely low power consumption and complexity, and therefore can have a battery of relatively small capacity, thereby achieving low cost and small size. The built-in battery may also serve as an energy storage unit for storing the ambient energy harvested by the power harvesting module, thereby achieving a long maintenance cycle or even being maintenance-free.

The active zero-power terminal has a built-in battery for power supply, so as to increase the communication distance of the zero-power terminal and improve communication reliability. Therefore, it is applied in scenarios that have relatively high requirements for communication distance, read latency and the like.

For some zero-power terminals, such as semi-passive zero-power terminals or active zero-power terminals, they may have active transmission capability, that is, for the reverse link, in addition to communicating by means of backscattering, they may also communicate by means of active transmission.

### Classification of zero-power devices based on transmitter type

The service types of the zero-power Internet of Things, similar to those of other Internet of Things service types, are mainly uplink services.

### Backscattering-based zero-power device

Such zero-power devices use the above backscattering manner for uplink data transmission. Such devices do not have an active transmitter capable of active transmission, but only have a backscatter transmitter. Therefore, when such terminals transmit data, they require the network device to provide a carrier, and such terminal devices perform backscattering based on the carrier to achieve data transmission.

### b) Active transmitter-based zero-power device

Such zero-power devices use active transmitters with active transmission capability for uplink data transmission. Therefore, when such zero-power devices transmit data, they can use their own active transmitters to transmit data without requiring the network device to provide a carrier. Active transmitters suitable for zero-power devices may be, for example, ultra-low power ASK transmitters, ultra-low power FSK transmitters or the like. Based on current implementations, when such transmitters transmit a signal of 100 µW, their overall power consumption may be reduced to 400-600 µW.

### c) Zero-power device with both backscattering and active transmitters

Such terminals may support both backscattering and active transmission. The terminal may determine which uplink signal transmission manner to use according to different conditions (e.g., power level or available ambient energy) or based on the scheduling of the network device: whether to use the backscattering manner or to use the active transmitters for active transmission.

### 3) Cellular Passive Internet of Things

Cellular Internet of Things is undergoing vigorous development. For example, 3GPP has standardized IoT technologies such as NB-IoT, MTC and RedCap. However, there are still many scenarios where the communication requirements of the Internet of Things cannot be met by using the existing technologies. For example:

### - Harsh communication environments

Certain Internet of Things scenarios may face extreme environments such as high temperature, extremely low temperature, high humidity, high pressure, high radiation, or high-speed motion, for example, ultra-high voltage substations, track monitoring for high-speed trains, environmental monitoring in extremely cold regions and industrial production lines. In these scenarios, due to the limitations imposed by the operating environment on conventional power supplies, existing Internet of Things terminals cannot operate. Moreover, extreme working environments are also unfavorable to the maintenance of Internet of Things, such as battery replacement.

### - Terminal form demand for extremely small size

Certain Internet of Things communication scenarios, such as food traceability, commodity circulation and smart wearables, require terminals to have extremely small dimensions to facilitate use in these scenarios. For example, Internet of Things terminals used for commodity management in the distribution chain are often in the form of electronic tags embedded in product packaging in a very compact form. As another example, lightweight wearable devices may enhance user experience while meeting user requirements.

### - Internet of Things communication demand for extremely low cost

Many Internet of Things communication scenarios require the cost of Internet of Things terminals to be sufficiently low to enhance their competitiveness relative to alternative technologies. For instance, in logistics or warehousing scenarios, to facilitate the management of a large number of items in circulation, Internet of Things terminals may be attached to each item, to realize precise management of the entire logistics process and full-life cycle through communication between the terminals and the logistics network. These scenarios demand that the prices of Internet of Things terminals be sufficiently competitive.

As 5G industry applications increase, the types and application scenarios of connected things are growing, leading to higher requirements for the price and power consumption of communication terminals. The application of battery-free and low-cost passive Internet of Things devices has become a key technology for cellular Internet of Things, enriching the types and quantity of terminal connections in 5G networks and truly realizing the Internet of Everything.

During the standardization discussion process, the zero-power Internet of Things may also be referred to as Ambient power enabled IoT, or Ambient IoT for short. In some technical literature, it is also referred to as passive IoT. The so-called Ambient IoT device refers to an IoT device that uses various ambient energies such as wireless radio frequency energy, light energy, solar energy, thermal energy, mechanical energy to drive itself. Such a device may have no energy storage capability, or may have a very limited energy storage capability (e.g., using a capacitor with a capacitance of several tens of µF). Compared with existing IoT apparatuses, Ambient IoT devices have many advantages such as being free of conventional batteries, maintenance-free, small in size, low in complexity and cost, and having a long life cycle. They may be widely applied in various industries, for example, in vertical industries such as logistics, smart warehousing, smart agriculture, energy and power, industrial internet and so on; and they may also be applied in personal applications such as smart wearable, smart home and so on.

Based on the discussions on Ambient IoT application scenarios by 3GPP SA1, Ambient IoT may be applied to at least the following four types of scenarios:
object identification, such as logistics, management of products on production lines, and supply chain management;
environmental monitoring, such as monitoring of temperature, humidity and harmful gases in working environments and natural environments;
positioning, such as indoor positioning, smart item finding and positioning of items on production lines; or
smart control, such as smart control of various electrical appliances in smart homes (e.g., turning air conditioners on/off or adjusting temperature), and smart control of various facilities in agricultural greenhouses (e.g., automatic irrigation or fertilization).

### 4) Ambient power-based devices (Ambient IoT)

In NR systems and Wi-Fi systems, the battery-free and low-cost nature of devices may support low-cost large-scale deployment and maintenance-free operation of IoT devices. Current standards are studying how to support ambient energy-based IoT devices (referred to as ambient IoT or AMP IoT devices) in NR systems and Wi-Fi systems, the energy required for their operation comes from ambient energy harvesting, and sources of the ambient energy may be wireless signals, solar energy, thermal energy and so on. Such devices are similar to the passive or semi-passive devices in zero-power communication.

Research projects on Ambient IoT devices have been carried out in 3GPP RAN, and Ambient IoT devices are roughly divided into three types, each with corresponding complexity and communication capabilities.
- Device A: lacks energy storage capability and cannot transmit independent signals, i.e., uses backscattering transmission manner.
- Device B: possesses energy storage capability but cannot transmit independent signals, i.e., uses backscattering transmission manner and can use the stored energy to amplify the backscatter signal.
- Device C: possesses energy storage capability and can transmit independent signals, i.e., has active transmission capability.

Device A has the lowest complexity and power consumption, which may be as low as 1 µW, but its communication distance is limited, generally only a few meters. Device A requires a network device to provide a carrier signal for backscattering transmission. Device C generally has a capacitor with a relatively large capacitance to store energy harvested from the environment, its power consumption may reach several hundred µW, and it may support active signal transmission, having a relatively large communication distance. Since Device C may perform active transmission, it does not require the network device to provide a carrier signal. The complexity and power consumption of Device B are between those of Device A and Device C.

In addition, the ambient energy harvesting supported by zero-power terminals may also be of various types, such as wireless radio frequency, solar energy, thermal energy and mechanical energy. A zero-power terminal based on wireless radio frequency power harvesting may require a network to provide a wireless radio frequency power supply signal.

### 5) Indoor Positioning Technology

In outdoor environments, thanks to GPS systems and independent cellular systems, mobile terminal positioning may achieve high accuracy. However, in indoor environments and environments with deep shadowing effects, satellite and cellular signals are often interrupted, making positioning very problematic.

When satellite positioning cannot be used in indoor environments, indoor positioning technology serves as an auxiliary positioning solution for satellite positioning, addressing the problems that satellite signals are weak when reaching the ground and unable to penetrate buildings, ultimately positioning the current location of the object. Indoor positioning refers to achieving location positioning in indoor environments, mainly adopting a combination of various technologies such as wireless communication, base station positioning and inertial navigation positioning to form an indoor positioning system, thereby enabling position monitoring of people, objects and so on in indoor spaces.

### 6) Phase Rotation in Backscattering

Referring to FIG. 6, a schematic diagram of backscattering communication related to the present application is illustrated. As illustrated in FIG. 6, a schematic diagram of backscattering communication is presented. In the figure, the Reader/Writer transmits a radio frequency signal to the zero-power device (e.g., the tag), the frequency of the signal being f and the wavelength being λ. The distance between the zero-power device and the Reader/Writer is d. When the zero-power device receives the radio frequency signal transmitted by the Reader/Writer, it may backscatter the signal and transmit it back to the Reader/Writer. The backscatter signal may be modulated to carry information transmitted by the zero-power device, or may be unmodulated. Generally speaking, due to the circuit implementation of the Reader/Writer and the zero-power device itself, corresponding phase offsets/phase rotations are introduced. In general, the phase difference between the backscatter signal received by the Reader/Writer and the generated radio frequency signal can be expressed as: $φ = \left({φ}_{d}+Δφ\right) mod 2 π$

Here, *φ_{d}* represents the phase rotation caused by the distance d during signal propagation, where ${φ}_{d} = \frac{2 π}{λ} 2 d . Δ φ$ represents the phase rotation caused by the circuitry of the Reader/Writer and the zero-power device, i.e., Δ*φ* = *φ_{T}* + *φ_{R}* + *φ_{Tag}*.

Ambient IoT devices have low complexity and low cost, may be maintenance-free and battery-free, and may obtain the energy required for communication from the environment through energy harvesting, communicating by means of backscattering or low-power active transmission. They may achieve high-density and large-scale deployment at relatively low cost. When deployed, they may serve as positioning anchors to assist positioning and improve positioning accuracy. For example, scenarios include such as cargo positioning in logistics, animal positioning on farms in the livestock industry, low-power positioning of individual users and items, and indoor positioning in shopping malls.

How to achieve positioning using Ambient IoT devices is an issue that needs to be addressed. Ambient IoT devices obtain energy for communication through ambient energy harvesting, which may be energy harvested from radio frequency, solar energy, thermal energy, mechanical energy and so on. Compared with traditional terminals that have batteries, the communication of Ambient IoT devices is affected by their energy status.

When positioning based on Ambient IoT devices, how to avoid the impact of energy status on positioning performance is crucial. Therefore, in order to implement positioning based on Ambient IoT devices, the present application designs a positioning solution that takes into account the impact of the energy status of Ambient IoT on communication, as well as Ambient IoT devices that support different communication methods.

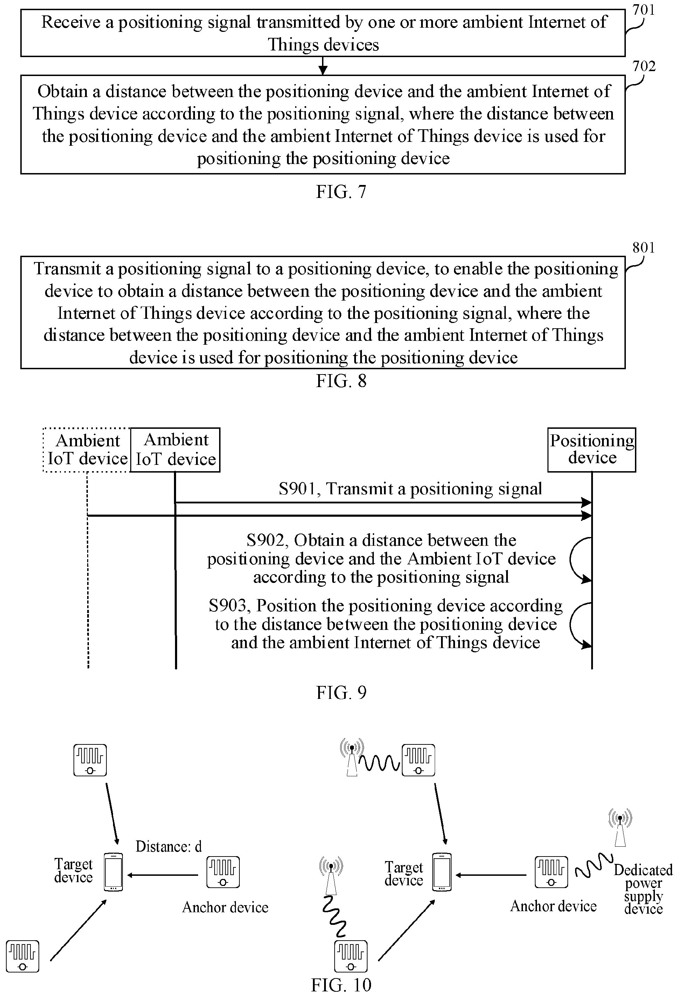

Referring to FIG. 7, a flowchart of a signal processing method provided by an embodiment of the present application is illustrated. The method may be performed by a positioning device, where the positioning device may be the terminal device 120 in the network architecture illustrated in FIG. 1. The method may include the following operations.

In operation 701: receive a positioning signal transmitted by one or more ambient Internet of Things devices.

In operation 702: obtain a distance between the positioning device and the ambient Internet of Things device according to the positioning signal, where the distance between the positioning device and the ambient Internet of Things device is used for positioning the positioning device.

In summary, in the solution presented in the present embodiment of the application, the positioning device can calculate the distance between itself and the ambient Internet of Things device through the positioning signal transmitted by the ambient Internet of Things device, so as to achieve the positioning of the positioning device, thereby expanding the application scenarios of the positioning function and improving the positioning effect.

Referring to FIG. 8, a flowchart of a signal processing method provided by an embodiment of the present application is illustrated. The method may be performed by an ambient Internet of Things device, where the ambient Internet of Things device may be the ambient Internet of Things device 130 in the network architecture illustrated in FIG. 1. The method may include the following operations:

In operation 801: transmit a positioning signal to a positioning device, to enable the positioning device to obtain a distance between the positioning device and the ambient Internet of Things device according to the positioning signal, where the distance between the positioning device and the ambient Internet of Things device is used for positioning the positioning device.

In summary, in the solution presented in the present embodiment of the application, the ambient Internet of Things device can transmit the positioning signal, and the positioning device can calculate the distance between itself and the ambient Internet of Things device through the positioning signal transmitted by the ambient Internet of Things device, so as to achieve the positioning of the positioning device, thereby expanding the application scenarios of the positioning function and improving the positioning effect.

Referring to FIG. 9, a flowchart of a signal processing method provided by an embodiment of the present application is illustrated. The method may be performed by a positioning device and an ambient Internet of Things device interactively. The positioning device may be the terminal device 120 in the network architecture illustrated in FIG. 1, and the ambient Internet of Things device may be the ambient Internet of Things device 130 in the network architecture illustrated in FIG. 1. The method may include the following operations:

In operation 901: one or more ambient Internet of Things devices transmit positioning signals to a positioning device, and the positioning device receives the positioning signals.

In some embodiments, when the ambient Internet of Things device transmits the positioning signal to the positioning device, it may transmit multiple positioning signals of different frequencies to the positioning device.

Correspondingly, when the positioning device receives the positioning signals transmitted by one or more ambient Internet of Things devices, it may receive multiple positioning signals of different frequencies transmitted by each of the one or more ambient Internet of Things devices.

Ambient IoT devices have a simple structure, low complexity and low cost, and are expected to be deployed on a large scale and at high density, supporting power harvesting from ambient energy to obtain energy for communication. In terms of communication modes, they may support only the backscattering communication mode (may have energy storage capability or may not have energy storage capability), or only support the active transmission communication mode, or support both backscattering (may have energy storage capability or may not have energy storage capability) and active transmission communication modes.

The Zero-power terminal (such as the above Ambient IoT device) deployed at high density and large scale may serve as an anchor device with a known position, enabling more accurate positioning, especially in some indoor environments, greatly improving the positioning accuracy. In the present application, the positioning device that needs to obtain its own position is referred to as the target device. The ambient IoT device with a known position is referred to as the anchor device.

When the target device needs to determine its own position, it may receive signals transmitted by surrounding anchor devices, and based on the signal transmitted by the anchor device, use a positioning algorithm based on characteristic information (e.g., phase information, signal strength information, carried data information) of the signal transmitted by the anchor device to determine the distance between the target device and the anchor device. Further, according to signals transmitted by multiple (e.g., at least three) anchor devices, the distances between the target device and the multiple anchor devices may be determined, and combined with the position information of the anchor devices, the position of the target device may be determined.

The positioning process may be performed by the target device actively receiving the signal transmitted by the anchor device. For example: the anchor device periodically transmits the signal, or the anchor device actively transmits the signal when the energy reaches a threshold; and the target device does not need to first transmit a trigger signal of the positioning process to the anchor device. As illustrated in FIG. 10, a schematic diagram of a communication between a target device and anchor devices related to the present application is illustrated.

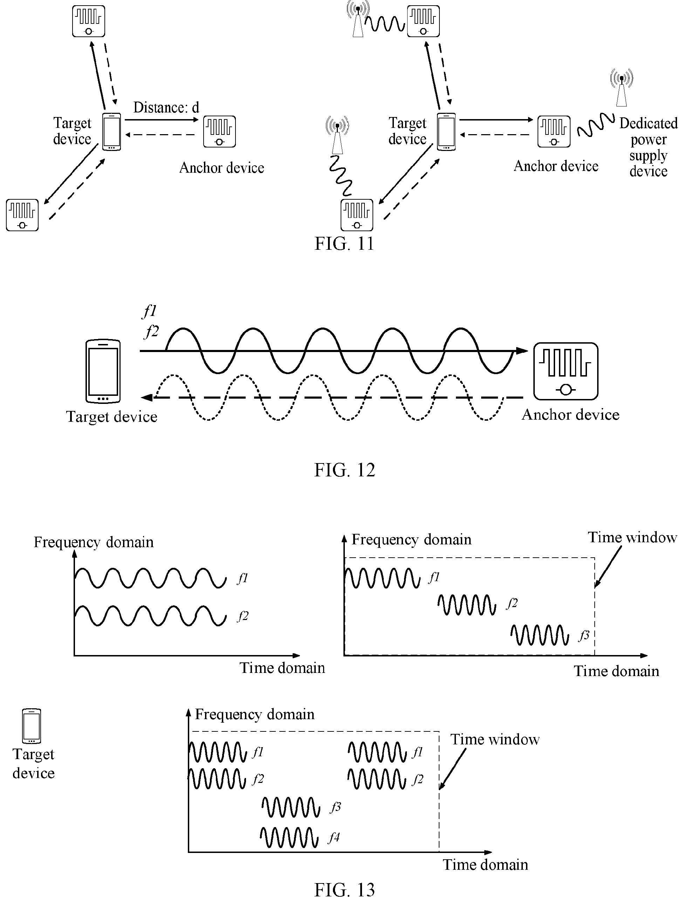

Alternatively, the positioning process may be triggered by the target device, i.e., the target device first transmits a trigger signal for communication to surrounding anchor devices, such as a scheduling signal, to schedule the anchor devices to communicate. As another example, the target device transmits a broadcast/groupcast/multicast signal to trigger the signal transmission process of the anchor devices. As illustrated in FIG. 11, another schematic diagram of a communication between a target device and anchor devices related to the present application is illustrated.

In FIG. 10 and FIG. 11, the anchor device may communicate using a backscattering communication mode or an active transmission communication mode. The anchor device obtains energy for communication by harvesting ambient energy (including harvesting light energy, radio frequency energy, thermal energy, vibration energy and so on). For anchor devices that perform power harvesting based on RF, a dedicated power supply device may be further deployed to provide the RF signal required for power harvesting.

The target device may determine, using a positioning algorithm, the distance between the anchor device and the target device based on the signal strength, phase information, carried data information (e.g., position information) and so on of the signal transmitted by the anchor device.

Signal strength: the target device may estimate its own position information based on the signal strength of signals transmitted by multiple anchor devices (at least two, in some scenarios at least three), combined with the position information of the anchor devices.

Phase information: when determining the distance to the anchor device based on phase, the basic principle is to convert distance into phase difference. The distance between the target device and the anchor device may be determined through the phase characteristics of a one-way (from anchor device to target device) or two-way (from target device to anchor device and then from anchor device to target device) signal. As illustrated in FIG. 10 or FIG. 11, when the target device communicates with an anchor device at a distance d, assuming the frequency of the radio frequency signal is f and the speed of light is c, then when the signal reaches the target device from the anchor device, it will cause a phase rotation of $2 πf \frac{d}{c} mod \left(2π\right)$. Correspondingly, when a signal is transmitted from the target device to the anchor device and then is reflected back to the target device, it will cause a phase rotation of $2 πf \frac{2 d}{c} mod \left(2π\right)$. Theoretically, the target device only needs to measure and obtain the phase difference corresponding to distance d or 2d, so as to calculate the distance d between the target device and the anchor device. However, in practice, when the target device and the anchor device perform signal transmission and reception, corresponding phase rotation errors are introduced. Therefore, it is difficult to accurately estimate the distance d between the target device and the anchor device with high precision based only on the phase characteristics of one frequency signal. Such phase rotation errors affect the positioning accuracy.

Therefore, when performing positioning based on the phase characteristics of the signals transmitted by the anchor device, phase characteristics (phase difference) of at least two signals of different frequencies are required for positioning. Taking two signals of different frequencies as an example, if only the phase difference of the one-way d is considered, the phase difference between the two frequency signals is $Δ φ = 2 π \left({f}_{1}-{f}_{2}\right) \frac{d}{c} mod \left(2π\right)$. Therefore, through the phase difference between the two frequency signals and the corresponding frequency values, the one-way distance $d = \frac{c ⋅ Δ φ}{2 π ⋅ Δ f} mod \left(\frac{c}{Δ f}\right)$ can be obtained. Correspondingly, if the two-way round-trip signal phase difference $Δ {φ}_{2} = 2 π \left({f}_{1}-{f}_{2}\right) \frac{2 d}{c} mod \left(2π\right)$ is used, the distance between the target device and the anchor device is $d = \frac{c ⋅ Δ {φ}_{2}}{4 π ⋅ Δ f} mod \left(\frac{c}{2 Δ f}\right)$.

To reduce the impact on positioning accuracy caused by unknown phase rotations introduced by the circuit structure of the target device and the anchor device or by processing such as signal transmission and reception, positioning auxiliary processing may be performed through multiple signals of different frequencies (at least two).

When positioning is performed based on phase, the positioning distance that can be supported is related to the frequency difference. The smaller the frequency difference between the two signals, the farther the positioning distance that can be supported, that is, the larger mod(c/2Δf) (the larger the ambiguity distance).

When positioning is performed based on the phases of signals of different frequencies, it is necessary to determine the maximum frequency difference of different signals transmitted by the Ambient IoT device according to the target scenario in which the Ambient IoT device is applied and the maximum positioning distance.

For example, when supporting positioning with a maximum range of 300 meters, the frequency difference Δf needs to be less than 1 MHz.

In some embodiments, the positioning signal is a signal transmitted by the ambient Internet of Things device via backscattering based on a carrier signal.

For the ambient IoT devices that support the backscattering transmission mode, they may not be able to autonomously generate the carrier signal required for communication. In this case, they need to rely on carrier signals provided by other devices to communicate based on the backscattering mode. Among them, the anchor device performs power harvesting on ambient energy to obtain energy for communication.

In some embodiments, the carrier signal is transmitted by the positioning device. When the positioning device needs to perform positioning, it provides the carrier signal for backscatter use to the Ambient IoT device, which ensures the intermittency of the system and reduces system complexity.

Alternatively, the carrier signal is transmitted by a third-party device other than the positioning device and the ambient Internet of Things device. When the positioning device needs to perform positioning, the third-party device may provide the carrier signal for backscatter use to the Ambient IoT device, which can support more application scenarios and improve the flexibility of carrier signal transmission.

In some embodiments, in a case where the carrier signal is transmitted by the positioning device, the carrier signal and a trigger signal are the same signal. The trigger signal is a signal transmitted by the positioning device, and the trigger signal is used to trigger the ambient Internet of Things device to transmit the positioning signal. In this case, the trigger signal may be reused as the carrier signal, which reduces signal interaction and improves communication efficiency.

Alternatively, the carrier signal and the trigger signal are different signals. In this case, the carrier signal may be transmitted separately, which improves the flexibility of carrier signal transmission.

In some embodiments, in a case where the carrier signal and the trigger signal are different signals, there is a time offset between a start time point of the carrier signal and a start time point of the trigger signal. In this case, the transmission times of the carrier signal and the trigger signal may be associated, which improves the transmission efficiency of different signals.

In some embodiments, in a case where the carrier signal is transmitted by a third-party device other than the positioning device and the ambient Internet of Things device, the carrier signal is transmitted periodically by the third-party device. In this case, the third-party device may periodically transmit the carrier signal without additional indication, which saves system signaling.

Alternatively, the carrier signal is transmitted by the third-party device under control of the positioning device. In this case, the third-party device may transmit the carrier signal as needed, which ensures the flexibility of carrier signal transmission and saves system resources.

In the above embodiments, in a case where the positioning signal is a signal transmitted by the ambient Internet of Things device via backscattering based on the carrier signal, the provider of the carrier signal may be as follows.
1) The carrier signal required for the communication of the anchor device may be provided by the target device (for example, as illustrated in FIG. 11).

For example, the carrier signal may be the same signal as the trigger signal (the control signal that triggers the anchor device to transmit the positioning signal) transmitted by the target device.

Alternatively, the carrier signal and the trigger signal transmitted by the target device may be two signals. Further, there may be a time offset with a magnitude T between the carrier signal and the trigger signal.

2) The carrier signal required for the communication of the anchor device may be provided by a third-party device (for example, the provider of the carrier signal may be the same device as the power supply device in FIG. 10, or the provider of the carrier signal may be a different device from the power supply device in FIG 10).

For example, the third-party device may periodically provide the carrier signal. As another example, the third-party device may provide the carrier signal under the control of the target device.

When the Ambient IoT device acts as an anchor device to assist the target device in positioning, it needs to transmit signals of different frequencies, which are used by the target device to perform positioning based on the phase difference of the signals of different frequencies, combined with a positioning algorithm.

In some embodiments, the carrier signal includes a plurality of first carrier signals of different frequencies transmitted simultaneously, and the positioning signal includes a plurality of first positioning signals of different frequencies that are in a one-to-one correspondence with the plurality of first carrier signals of different frequencies. In this case, the carrier signal may be transmitted in one transmission, which ensures the efficiency of carrier signal transmission.

And/or, the carrier signal includes a plurality of second carrier signals of different frequencies transmitted in a time-division manner, and the positioning signal includes a plurality of second positioning signals of different frequencies that are in a one-to-one correspondence with the plurality of second carrier signals of different frequencies. In this case, the carrier signals may be transmitted in multiple separate transmissions, which ensures the success rate of the first transmission of the carrier signals and subsequent positioning signals.

In the above embodiments, the Ambient IoT device may simultaneously receive the plurality of first carrier signals of different frequencies, and for each first carrier signal, the Ambient IoT device transmits a corresponding first positioning signal by means of reflection.

Alternatively, the Ambient IoT device may separately receive second carrier signals at different times, and the frequencies of the second carrier signals received at different times may be different. For each second carrier signal, the Ambient IoT device transmits a corresponding second positioning signal by means of reflection.

In some embodiments, in a case where the carrier signal includes the plurality of second carrier signals of different frequencies transmitted in the time-division manner, the plurality of second carrier signals of different frequencies are a plurality of signals transmitted within a first time window.

In the embodiments of the present application, to avoid the transmission process of the carrier signals occupying too many resources and affecting the communication of other surrounding devices, the above plurality of second carrier signals of different frequencies may be transmitted within a time window.

In some embodiments, a length of the first time window is determined by the positioning device; or
a length of the first time window is defined by a protocol; or
the first time window is determined by the ambient Internet of Things device.

In the present application, the target device may generate radio frequency signals (i.e., carrier signals) of different frequencies and transmit them to the anchor device, and the anchor device performs backscattering based on the signals of different frequencies. Referring to FIG. 12, a schematic diagram of a target device generating radio frequency signals of different frequencies related to the present application is illustrated.

Referring to FIG. 13, a schematic diagram of transmission processing of signals of different frequencies related to the present application is illustrated. The transmission processing of radio frequency signals of different frequencies may be as follows.
1) As illustrated in FIG. 13, the target device may transmit a plurality of signals of different frequencies (at least two) simultaneously. When transmitting the signals of different frequencies, the initial phases may be kept consistent. In other implementations, the initial phases may be different.
2) As illustrated in FIG. 13, in other implementations, a time-division method may be used to transmit the signals of different frequencies.
   In some embodiments, to reduce the impact of channel changes, the signals of different frequencies transmitted in a time-division manner need to be completed within a time window T. T may be implemented based on the target device itself, or a value of T may be agreed upon by a protocol, or T may be determined by the Ambient IoT device and notified to the target device.
3) As illustrated in FIG. 13, in other implementations, the above two methods may be combined. That is, in each of multiple different time periods, the target device may transmit multiple radio frequency signals of different frequencies as carrier signals.

In some embodiments, a frequency of the positioning signal is the same as a frequency of the carrier signal reflected by the positioning signal. In this case, the frequency of the positioning signal may directly follow the frequency of the carrier signal, which simplifies system complexity.

Alternatively, there is a frequency offset between a frequency of the positioning signal and a frequency of the carrier signal reflected by the positioning signal. In this case, the frequency of the positioning signal may be set more flexibly, which ensures flexibility in setting the frequency of the positioning signal.

In some embodiments, in a case where there is a frequency offset between the frequency of the positioning signal and the frequency of the carrier signal reflected by the positioning signal:
a value of the frequency offset is defined by a protocol; or
a value of the frequency offset is associated with the ambient Internet of Things device; or
a value of the frequency offset is indicated by the positioning device to the ambient Internet of Things device.

In some embodiments, the method illustrated in FIG. 9 further includes the following. The positioning device may transmit first indication information to the ambient Internet of Things device, where the first indication information is used to indicate whether there is a frequency offset between the frequency of the positioning signal and the frequency of the carrier signal reflected by the positioning signal. Correspondingly, the ambient Internet of Things device may receive the first indication information transmitted by the positioning device.

In the above embodiments, the positioning device may control whether there is a frequency offset between the frequency of the positioning signal and the frequency of the carrier signal reflected by the positioning signal, thereby further improving the flexibility of setting the frequency of the positioning signal.

For example, the above first indication information may be carried in the trigger signal and indicated to the Ambient IoT device, or may be carried in another signal transmitted before the carrier signal and indicated to the Ambient IoT device.

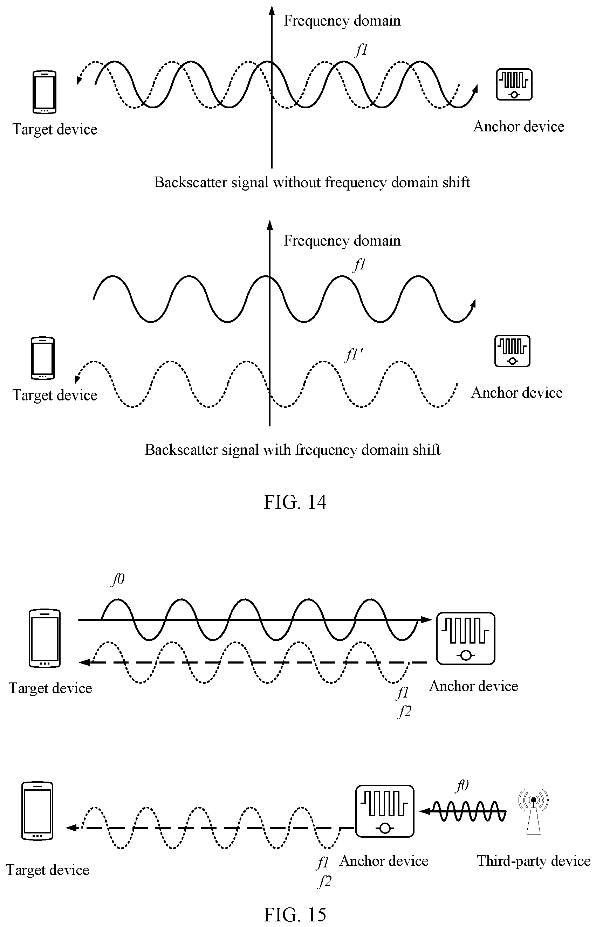

Referring to FIG. 14, a schematic diagram of a frequency-domain offset of a backscatter signal related to the present application is illustrated. As illustrated in FIG. 14, the frequency-domain offset processing of a backscatter signal may be as follows.
1) The anchor device may perform backscattering based on the original frequency of the carrier signal. In some embodiments, when performing backscattering based on the original frequency, the target device may directly determine the two-way round-trip phase difference based on the transmitted signal and the received signal of the same frequency.
2) Alternatively, when the anchor device performs backscattering based on the carrier signal, a frequency offset may be applied. In some embodiments, when processing based on the frequency offset, it helps to separate the transmitted signal and received signal of the target device in the frequency-domain, thereby reducing interference between signals.

For anchor devices that may apply the frequency offset, when assisting positioning, whether to apply the frequency offset to the transmitted backscatter signal has the following feasible solutions.
① Fixed backscattering communication mode: i.e., for assisting positioning, it may be fixed to perform backscattering based on the original frequency; or it may always apply a frequency offset to the original frequency and perform backscattering based on the offset frequency. The frequency offset value here may be a fixed value agreed upon by a protocol, or a value associated with the implementation of the anchor device. The frequency offset values of different anchor devices may be the same or different.
② Control-based backscattering communication mode: when performing backscattering, whether to apply the frequency offset is based on the control of the target device. The target device indicates to the anchor device whether to apply the frequency offset, including explicit indication and implicit indication.

Explicit indication: for example, by enabling the frequency offset, or by indicating the backscattering communication mode (mode 1: original frequency backscattering; mode 2: frequency offset backscattering). When there is no indication information, it may mean that frequency offset is not applied.

Implicit indication: for example, the data processing during backscattering may be indicated, such as the modulation scheme of the anchor device. Different modulation schemes correspond to different backscattering processing. For example, using OOK modulation may be associated with original frequency backscattering, while using FSK modulation may be associated with frequency offset backscattering. Alternatively, the specific offset value may also be indicated. When there is no indication, it means offset is not applied.

③ When frequency offset is applied, the frequency offset magnitude may be a fixed value agreed upon by a protocol, or a value associated with the implementation of the anchor device. The frequency offset values of different anchor devices may be the same or different. Alternatively, the frequency offset magnitude may be indicated by the target device. The specific frequency offset magnitude that can be indicated may be in units of Hz, kHz and so on. Alternatively, the above frequency offset may be indicated by a frequency offset index. For example, the target device indicates the multiple different frequency offset values agreed upon by a protocol, or the target device indicates the supported frequency offset values that can be reported by the anchor device. The above frequency offset may also be a relative frequency offset, such as an offset of x subcarriers. The value of x may be directly indicated, or may be an index value of multiple possible values.

In some embodiments, the carrier signal includes a single third carrier signal, and the positioning signal includes a plurality of third positioning signals of different frequencies that are determined based on a frequency of the third carrier signal. In this case, only one carrier signal is needed, and a plurality of positioning signals of different frequencies may be reflected, which simplifies the carrier signal transmission process, improves carrier signal transmission efficiency and saves system resources.

In the above embodiments, the anchor device may generate signals of different frequencies based on one carrier signal and transmit them to the target device; for example, referring to FIG. 15, a schematic diagram of an anchor device generating radio frequency signals of different frequencies related to the present application is illustrated. As illustrated in FIG. 15, the target device transmits a carrier signal of frequency f0 to the anchor device. When performing backscattering, the anchor device applies a frequency offset based on the carrier frequency f0, generating backscatter signals of different frequencies to transmit to the target device. The target device determines the distance to the anchor device based on the phase information of the signals of different frequencies. Alternatively, the third-party device provides the carrier/power supply signal required for the backscattering by the anchor device, and the anchor device performs backscattering based on the carrier of frequency f0 provided by the third-party device, obtaining two backscatter signals of different frequencies to transmit to the target device. The target device determines the distance to the anchor device based on the phase information of the signals of different frequencies.

In some embodiments, a frequency offset between the third positioning signal and the third carrier signal is defined by a protocol; or
a frequency offset between the third positioning signal and the third carrier signal is determined by the ambient Internet of Things device; or
a frequency offset between the third positioning signal and the third carrier signal is determined and indicated to the ambient Internet of Things device by the positioning device.

In some embodiments, the third positioning signals are used to carry modulation information; or the third positioning signals are not used to carry modulation information.

In some embodiments, in a case where the third positioning signals are used to carry modulation information: the plurality of third positioning signals of different frequencies are used to carry the same modulation information; or the plurality of third positioning signals of different frequencies are used to carry different modulation information.

In the above embodiments, the processing of backscatter signals (i.e., third positioning signals) of different frequencies may be as follows: when the anchor device performs backscattering communication, it may obtain backscatter signals of different frequencies through frequency-domain shifting, for example, passing the carrier signal through a mixer to obtain output signals of different frequencies; or obtaining output signals of different frequencies through FSK modulation.

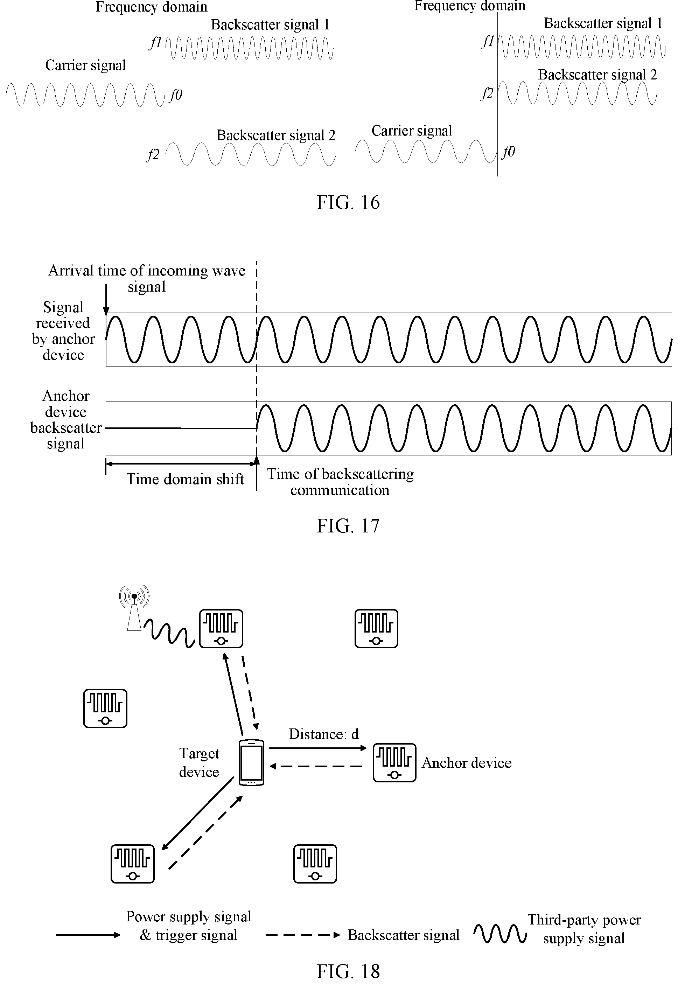

For example, referring to FIG. 16, a schematic diagram of an anchor device obtaining backscatter signals of different frequencies related to the present application is illustrated. As illustrated in FIG. 16, the two backscatter signals of different frequencies obtained by the anchor device may be located on both sides of the carrier frequency, or on the same side.

The frequency offsets of the two backscatter signals of different frequencies obtained by the anchor device relative to the carrier signal may be agreed upon by a protocol (for example, may be a frequency offset dedicated to assisting positioning); or may be based on the implementation of the anchor device; alternatively, may be based on control of the target device, i.e., the target device indicates the frequency offset.

The two backscatter signals of different frequencies used to assist positioning may not carry modulated information; or may carry modulated information transmitted by the anchor device to the target device.

When carrying information transmitted by the anchor device to the target device, the two backscatter signals of different frequencies may carry the same information, or carry different information.

In some embodiments, there is a time-domain offset between a time at which the ambient Internet of Things device receives the carrier signal and a time at which the ambient Internet of Things device transmits the positioning signal via backscattering based on the carrier signal. In this case, after receiving the carrier signal, the anchor device may delay for a period of time before performing backscattering to transmit the positioning signal, so as to reserve sufficient preparation time for the transmitting and receiving of the positioning signal, which ensures the accuracy of positioning signal transmission and improves positioning accuracy.

In some embodiments, a value of the time-domain offset is defined by a protocol; or
a value of the time-domain offset is determined by the ambient Internet of Things device; or
a value of the time-domain offset is determined and indicated to the ambient Internet of Things device by the positioning device.

Generally, many wireless radio frequency signals exist in the surrounding environment of the anchor device. In order to better assist positioning, relevant control of the backscattering of the anchor device is required, such as control including coding and modulation algorithms, frequency shift control, time-domain offset control, or frame structure indication. Therefore, the anchor device itself needs to receive and process the control information, and further needs to perform backscattering according to the indication of the control information, which itself requires a certain processing delay, which may introduce unknown phase rotations.

To improve positioning accuracy, time-domain offset control may be introduced in the backscattering communication process. That is, when the anchor device receives a signal transmitted by the target device, the anchor device does not immediately perform backscattering communication, but performs backscattering communication after a certain time-domain offset. Referring to FIG. 17, a schematic diagram of a time-domain offset of a backscatter signal related to the present application is illustrated. As illustrated in FIG. 17:
1) the time-domain offset may be in units of relative time, such as an OFDM symbol, a slot, a subframe, a frame, or a basic backscatter time unit; or in units of absolute time, such as us, ms, or s;
2) the time offset may be a fixed value, for example, a fixed time offset agreed upon by a protocol, and all anchor devices perform backscattering communication based on this time offset;
3) the time offset may be implemented based on the anchor device, for example, different anchor devices require different times to process control signals, and the corresponding time offset may be determined according to the specific implementation; and
4) the time offset may be indicated by the target device. The time offset value (units as above) may be directly indicated; or an index value of preset multiple time offsets (there are multiple time offset values agreed upon by a protocol or configured by the target device, and the time offset value is indicated by indicating the index of the time offset value) may be indicated.

In some embodiments, the positioning signal is a signal transmitted by the ambient Internet of Things device by means of low-power active transmission.

Here, the anchor device may transmit the positioning signal using the low-power active transmission communication manner; for an Ambient IoT terminal device that can adopt the low-power active transmission communication manner, it has the ability to generate a positioning signal and does not require other devices to provide the carrier signal required for communication. However, different from existing smart devices, due to the lack of a battery, it cannot continuously communicate for a long time. The Ambient IoT device may perform power harvesting from ambient energy to obtain energy for communication.

In some embodiments, a manner of obtaining energy for the ambient Internet of Things device to transmit the positioning signal includes one or more of the following: harvesting ambient energy other than radio frequency signals;
harvesting energy from a first radio frequency signal transmitted by the positioning device; or
harvesting energy from a second radio frequency signal transmitted by a third-party device.

In some embodiments, in a case where the manner of obtaining the energy for the ambient Internet of Things device to transmit the positioning signal includes harvesting energy from the first radio frequency signal transmitted by the positioning device,
the first radio frequency signal and a trigger signal are the same signal, where the trigger signal is a signal transmitted by the positioning device, and the trigger signal is used to trigger the ambient Internet of Things device to transmit the positioning signal; or
in a case where the positioning signal is a signal transmitted by the ambient Internet of Things device via backscattering based on a carrier signal, the first radio frequency signal and the carrier signal are the same signal; or
the first radio frequency signal is a signal other than the trigger signal and the carrier signal.

In some embodiments, in a case where the manner of obtaining the energy for the ambient Internet of Things device to transmit the positioning signal includes harvesting energy from the second radio frequency signal transmitted by the third-party device:
the second radio frequency signal is transmitted periodically by the third-party device; or
the second radio frequency signal is transmitted by the third-party device under control of the positioning device.

Here, in a case where the positioning signal is a signal transmitted by the ambient Internet of Things device by means of low-power active transmission, the manner of obtaining ambient energy may include at least one of the following.
1) Harvesting energy from energy such as light energy, radio frequency energy, thermal energy and vibration energy in the environment.
2) Harvesting energy from a radio frequency signal transmitted by the target device.

For example, the radio frequency signal may be the same signal as the trigger signal (the control signal that triggers the anchor device to transmit the positioning signal) transmitted by the target device.

Alternatively, the radio frequency signal may be a signal transmitted independently by the target device. Further, there may be a time offset with a magnitude T between the radio frequency signal and the trigger signal.

3) Harvesting energy from a radio frequency signal transmitted by a third-party device.

For example, the third-party device may periodically provide the radio frequency signal for the Ambient IoT device to perform power harvesting. As another example, the third-party device may provide the radio frequency signal under the control of the target device.

When the Ambient IoT device acts as an anchor device to assist the target device in positioning, it needs to transmit signals of different frequencies, which are used by the target device to perform positioning based on the phase difference of the signals of different frequencies, combined with a positioning algorithm.

In some embodiments, in a case where the positioning signal is a signal transmitted by the ambient Internet of Things device by means of low-power active transmission, the positioning signal includes a plurality of fourth positioning signals of different frequencies that respectively correspond to a plurality of trigger signals, where the trigger signals are signals transmitted by the positioning device, and the trigger signals are used to trigger the ambient Internet of Things device to transmit the positioning signal.

Here, the target device may trigger the anchor device multiple times to transmit signals; when the target device triggers the anchor device to transmit signals, the anchor device performs low-power active transmission at the corresponding frequency. Through multiple triggers by the target device, the anchor device may perform low-power active transmission multiple times, and there are at least two signals of different frequencies.

In some embodiments, in a case where the positioning signal includes the plurality of fourth positioning signals:
a frequency-domain position of the fourth positioning signal is indicated by the positioning device; or
a frequency-domain offset between a frequency-domain position of the fourth positioning signal and a frequency-domain position of the trigger signal corresponding to the fourth positioning signal is indicated by the positioning device; or
a frequency-domain position of the fourth positioning signal is the same as a frequency-domain position of the trigger signal corresponding to the fourth positioning signal; or
a frequency-domain offset between a frequency-domain position of the fourth positioning signal and a frequency-domain position of the trigger signal corresponding to the fourth positioning signal is defined by a protocol.

In some embodiments, in a case where the positioning signal includes the plurality of fourth positioning signals, the plurality of trigger signals are a plurality of signals transmitted within a second time window.

Here, the frequency resources of the trigger signals of the target device may be as follows.
1) The target device may perform triggers in a time-division manner on the same frequency resource. When the target device triggers the anchor device to transmit the positioning assistance signal each time, it indicates the frequency-domain resource.
   The target device may directly indicate the frequency-domain position of the signal during low-power active transmission; or the target device may indicate the frequency-domain offset of the signal relative to the trigger signal during low-power active transmission.
2) The target device may perform triggers in a time-division manner on different frequency resources.

When the target device triggers the anchor device to transmit the positioning assistance signal each time, it indicates the frequency-domain resource.

For example, it may directly indicate the frequency-domain position of the signal during low-power active transmission. As another example, it may indicate the frequency-domain offset of the signal relative to the trigger signal during low-power active transmission.

Alternatively, the target device does not need to indicate the frequency-domain resource. The signal when the anchor device performs low-power active transmission has an associated relationship with the trigger signal; for example, the same frequency as the trigger signal is adopted; as another example, an offset agreed upon by a protocol or semi-statically configured is adopted.

3) Further, when the target device triggers the anchor device to perform low-power active transmission, it needs to be completed within a time window T.

The processing of the anchor device transmitting signals of different frequencies may be as follows: a time-division manner is adopted to transmit signals of different frequencies.

In order to reduce the impact of channel changes and meet the delay requirements of positioning scenarios, signals of different frequencies transmitted in a time-division manner need to be completed within a time window T. T may be based on the target device's own implementation, or a value of T may be agreed upon by a protocol.

In some embodiments, in a case where the positioning signal is a signal transmitted by the ambient Internet of Things device by means of low-power active transmission, the positioning signal includes a plurality of fifth positioning signals of different frequencies that correspond to a single trigger signal.

Here, the target device may trigger the anchor device to perform multiple communications (i.e., transmit the positioning signal multiple times) in a single trigger; that is, the target device may perform trigger once, and when the anchor device receives the trigger from the target device, the anchor device transmits the positioning signal multiple times using different frequency resources. For example, during the above process of transmitting the positioning signal multiple times, the same initial phase may be adopted. Optionally, a fixed phase difference may be adopted for the two adjacent transmissions of the positioning signal.

In some embodiments, in a case where the positioning signal includes the plurality of fifth positioning signals, the trigger signal is further used to indicate the following information:
a frequency-domain position of the fifth positioning signal; or
a frequency-domain offset between a frequency-domain position of the fifth positioning signal and a frequency-domain position of the trigger signal; or
a time window in which the plurality of fifth positioning signals are located; or
an initial frequency-domain position among frequency-domain positions of the plurality of fifth positioning signals, and a frequency hopping interval between the frequency-domain positions of the plurality of fifth positioning signals.

Here, the indication content of the trigger signals of the target device may be as follows.

It may directly indicate multiple (at least two) frequency-domain positions of the signal during low-power active transmission.

It may indicate multiple (at least two) frequency-domain offsets of the signal relative to the trigger signal during low-power active transmission.

It may indicate a time window; where the indication of the time window may use at least one of the following: a time offset of a start position of the time window relative to the trigger signal; a time offset of an end position of the time window relative to the trigger signal; a start position of the time window; an end position of the time window; or a length of the time window.

It may indicate an initial frequency-domain position and a subsequent frequency hopping interval.

In some embodiments, the plurality of fourth positioning signals or the plurality of fifth positioning signals are signals transmitted by the ambient Internet of Things device in a time-division manner.

In some embodiments, the plurality of fourth positioning signals or the plurality of fifth positioning signals are a plurality of signals transmitted within a third time window.

In some embodiments, the third time window is determined by the ambient Internet of Things device; or a length of the third time window is defined by a protocol.

Here, the processing of the anchor device transmitting signals of different frequencies may be as follows: a time-division manner is adopted to transmit signals of different frequencies.

In order to reduce the impact of channel changes and meet the delay requirements of positioning scenarios, signals of different frequencies transmitted in a time-division manner need to be completed within a time window T. T may be based on the target device's own implementation, or a value of T may be agreed upon by a protocol.

In some embodiments, time offset amounts between the plurality of fourth positioning signals or the plurality of fifth positioning signals and the trigger signal are a fixed value; or
time offset amounts between the plurality of fourth positioning signals or the plurality of fifth positioning signals and the trigger signal are determined by the ambient Internet of Things device; or
time offset amounts between the plurality of fourth positioning signals or the plurality of fifth positioning signals and the trigger signal are indicated by the positioning device.

In some embodiments, in a case where the time offset amounts between the plurality of fourth positioning signals or the plurality of fifth positioning signals and the trigger signal are indicated by the positioning device, the trigger signal is further used to indicate the following information:
the time offset amounts between the plurality of fourth positioning signals or the plurality of fifth positioning signals and the trigger signal; or
a time window for transmitting the plurality of fourth positioning signals or the plurality of fifth positioning signals; or
a time offset amount between a latest transmission time of the plurality of fourth positioning signals or the plurality of fifth positioning signals and the trigger signal.

Here, the time-domain resources of signals transmitted by means of low-power active transmission may be as follows.
1) When the target device triggers the anchor device to transmit a signal, it may indicate the time-domain resource for signal transmission.

① Indicate a time offset to determine a time-domain position for signal transmission.

For example, when the energy of the anchor device is insufficient for signal transmission, the trigger fails and no signal is transmitted. When the energy of the anchor device is sufficient for signal transmission, the trigger succeeds and the signal is transmitted.

② Indicate a time window (for example, a length of the time window may be indicated).

For example, the anchor device transmits a signal within the time window according to its energy state. When the energy obtained through power harvesting is sufficient for communication, the signal is transmitted; otherwise, no signal is transmitted.

③ Indicate a time offset to determine the latest time-domain transmission position of the signal.

For example, before the latest time-domain transmission position of the signal, the anchor device transmits a signal according to its energy state. When the energy obtained through power harvesting is sufficient for communication, the signal is transmitted; otherwise, no signal is transmitted.

2) When the target device triggers the anchor device to transmit a signal, it may not indicate the time-domain resource for signal transmission.

For example, the terminal, according to its energy state, transmits a signal when the energy obtained through power harvesting is sufficient for communication; otherwise, no signal is transmitted.

3) The time-domain offset may be in units of relative time, such as an OFDM symbol, a slot, a subframe, a frame, or a basic backscatter time unit; or in units of absolute time, such as us, ms, or s.

4) The time offset may be a fixed value, for example, a fixed time offset agreed upon by a protocol, and all anchor devices perform backscattering communication based on this time offset.

5) The time offset may be implemented based on the anchor device, for example, different anchor devices require different times to process control signals, and the corresponding time offset may be determined according to the specific implementation.

6) The time offset may be indicated by the target device. The time offset value (units as above) may be directly indicated; or an index value of preset multiple time offsets (there are multiple time offset values agreed upon by a protocol or configured by the target device, and the time offset value is indicated by indicating the index of the time offset value) may be indicated.

In some embodiments, the method illustrated in FIG. 9 further includes the following.

The positioning device may transmit a trigger signal simultaneously to a plurality of ambient Internet of Things devices by means of broadcasting or multicasting, where the trigger signal is used to trigger the ambient Internet of Things device to transmit the positioning signal; alternatively, the positioning device may transmit a trigger signal to the ambient Internet of Things device by means of unicasting.

Correspondingly, the ambient Internet of Things device may receive a trigger signal transmitted by the positioning device simultaneously to a plurality of ambient Internet of Things devices by means of broadcasting or multicasting; alternatively, the ambient Internet of Things device may receive a trigger signal transmitted by the positioning device to the ambient Internet of Things device by means of unicasting.

In some embodiments, in a case where the positioning device transmits the trigger signal simultaneously to the plurality of ambient Internet of Things devices by means of broadcasting or multicasting, or in a case where the ambient Internet of Things device receives the trigger signal transmitted by the positioning device simultaneously to the plurality of ambient Internet of Things devices by means of broadcasting or multicasting, the positioning signal includes information associated with a location of the ambient Internet of Things device;
where the information associated with the location of the ambient Internet of Things device includes: an identifier of the ambient Internet of Things device, and/or location information of the ambient Internet of Things device.

For example, the timing of backscattering communication for multiple anchor devices needs to be defined. To position the target device, multiple (at least three) anchor devices are required for assistance. When the target device performs positioning based on backscatter signals of multiple anchor devices, it can be divided into two implementation manner.
1) Simultaneously transmit radio frequency signals (which may carry control information) to multiple anchor devices, and receive backscatter signals of the multiple anchor devices. Referring to FIG. 18, a schematic diagram of a target device simultaneously transmitting radio frequency signals to multiple anchor devices related to the present application is illustrated.

In this manner, when the anchor device performs backscattering, it needs to carry the association information used to determine the position of the anchor device. Specifically, the association information may include one of the following: terminal identification information or position information of the anchor device.

For example, the anchor device may carry its terminal identification information in the positioning signal for the target device to identify the anchor device. The position information of the anchor device needs to be obtained by other means. For example, a control center (which may be a network device) stores the position information of the anchor device, and the target device needs to communicate with the control center to obtain the position information of the anchor device. In some implementations, the target device does not need to obtain the specific position information of the anchor device. At this time, the target device obtains the distances between itself and multiple anchor devices, as well as the terminal identifiers of the corresponding anchor devices, and may transmit the information to the control center. The control center then determines the position of the target device based on the positions of the anchor devices and the information transmitted by the target device, and directly returns the position information of the target device to the target device.

As another example, the anchor device may directly transmit its own position information to the target device in the positioning signal; and the target device obtains its own position information based on the positions of multiple anchor devices and the calculated distances to these anchor devices.

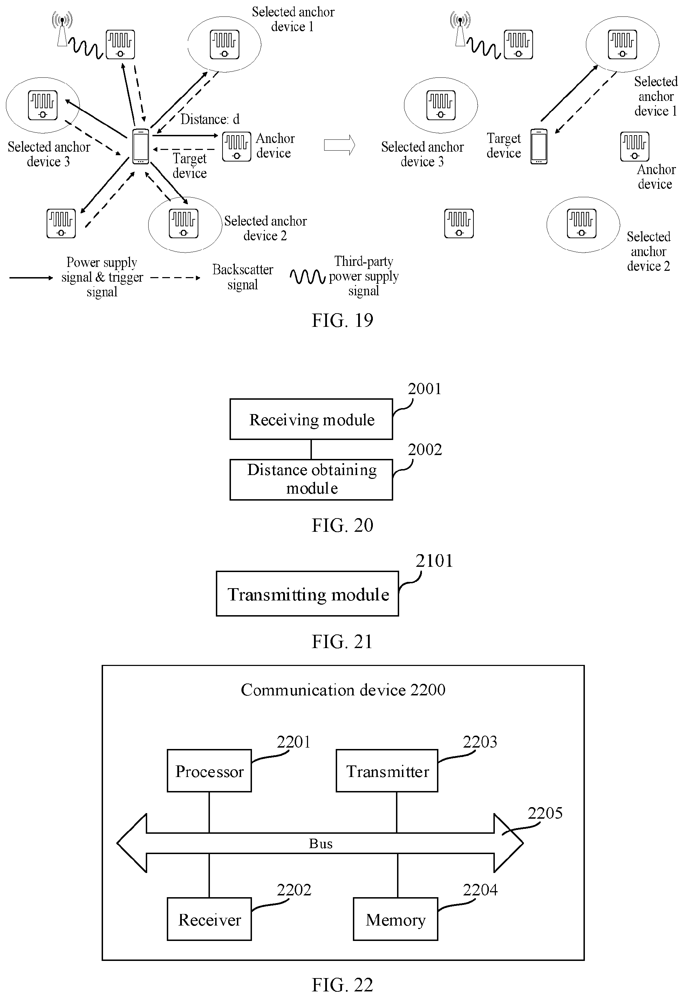

2) Based on a scheduling manner, perform point-to-point communication with an anchor device, schedule a certain anchor device to perform backscattering communication, and determine the distance to that anchor device based on the backscatter signal of that anchor device. Referring to FIG. 19, a schematic diagram of a target device scheduling backscattering by an anchor device related to the present application is illustrated.

The target device may first identify surrounding anchor devices, determine the surrounding anchor devices, then select at least three anchor devices, and perform point-to-point communication with the anchor devices using the scheduling manner, to determine the distances to the anchor devices based on the phase information of the backscatter signals. Then, based on the distances to multiple anchor devices and the position information of these anchor devices, the target device may determine its own position.

When the target device identifies surrounding anchor devices, the target device may transmit control information to the surrounding anchor devices, whereupon the surrounding anchor devices perform backscattering, and the backscatter information carries the association information for determining the position of the anchor device (at least including identification information), as described in the first manner above. The terminal may select at least three anchor devices to assist positioning based on the preset rule or implementation manner.

As another example, the timing of low-power active transmission by multiple anchor devices needs to be defined.
1) The target device simultaneously transmits radio frequency signals (which may carry control information, and broadcasting/multicasting/groupcasting) to multiple anchor devices, and receives signals actively transmitted by the multiple anchor devices.

When the anchor device transmits a signal, the anchor device needs to carry association information for determining the position of the anchor device. Specifically, the association information may include one of the following: terminal identification information or position information of the anchor device.

2) Based on a scheduling manner, perform point-to-point communication with an anchor device, schedule a certain anchor device to communicate, and determine the distance to that anchor device based on the actively transmitted signal of that anchor device.

In some embodiments, the method illustrated in FIG. 9 further includes the following.

The positioning device may indicate time information for transmitting the positioning signal to the ambient Internet of Things device when transmitting the trigger signal, to enable the ambient Internet of Things device to transmit the positioning signal to a plurality of devices in a time-division manner in a case where the ambient Internet of Things device simultaneously receives the trigger signal transmitted by the plurality of devices; where the plurality of devices include the positioning device.

Correspondingly, the ambient Internet of Things device may receive time information for transmitting the positioning signal indicated by the positioning device when the positioning device transmits the trigger signal; and transmit, according to the time information, the positioning signal to a plurality of devices in a time-division manner in a case of simultaneously receiving the trigger signal transmitted by the plurality of devices; where the plurality of devices include the positioning device.

In some embodiments, the time information includes:
a transmission time window, a plurality of time-domain offset amounts between reception time points of the trigger signal and transmission time points of the positioning signal, and a plurality of transmission time points of the positioning signal.

In some embodiments, the method illustrated in FIG. 9 further includes the following.

When transmitting the trigger signal, the positioning device may indicate to the ambient Internet of Things device to transmit identification information of the positioning device. In this case, the positioning signal includes the identification information of the positioning device.

Correspondingly, the ambient Internet of Things device may receive an indication from the positioning device to transmit identification information of the positioning device when the positioning device transmits the trigger signal.

For example, when the anchor device transmits the positioning signal via backscattering, there may be more than one target device requiring positioning. When multiple target devices require positioning, there may be a situation where two or more target devices simultaneously trigger the same anchor device to perform backscattering. In this case, the positioning processing for multiple target devices may be as follows.
1) When the target device actively receives and processes the backscatter signal of the anchor device, different target devices perform their own processing.
2) When the target device triggers the anchor device to perform backscatter processing:
   ① The target device carries its own identification information and transmits it to the anchor device. The anchor device performs backscattering according to the received identification information of the target device, and transmits the identification information or information processed based on the identification information to the target device via backscattering. When triggers from multiple target devices collide, the anchor device determines to perform backscattering communication with a certain target device according to a preset rule (e.g., based on priority of terminal groups, time order of trigger arrival and so on), and abandons communication with other target devices.
   ② Alternatively, when the target device triggers the anchor device to perform backscattering, the target device allows the anchor device to perform backscattering within a time window. When triggers from multiple target devices collide, the anchor device performs backscattering to different target devices in a time-division manner according to the time window indicated by the target device. It is required to ensure that carrier signals are present throughout the entire time window. When the target device conflicts cannot be resolved, the anchor device determines to perform backscattering communication with a certain target device according to a preset rule, and abandons communication with other target devices.
   ③ Alternatively, when the target device triggers the anchor device to perform backscattering communication, the target device indicates at least two time-domain offsets, or at least two backscattering communication times. When triggers from multiple target devices collide, the anchor device selects a corresponding time unit to perform backscattering communication according to the indication information of the target device.

As another example, when the anchor device transmits the positioning signal by means of active transmission, there may be more than one target device requiring positioning. When multiple target devices require positioning, there may be a situation where two or more target devices simultaneously trigger the same anchor device to communicate. In this case, the positioning processing for multiple target devices may be as follows.
1) When the target device actively receives and processes the signal transmitted by the anchor device, different target devices perform their own processing.
2) When the target device triggers the anchor device to communicate:
   ① The target device carries its own identification information and transmits it to the anchor device. The anchor device communicates according to the received identification information of the target device, and transmits the identification information or information processed based on the identification information to the target device by means of low-power active transmission. When triggers from multiple target devices collide, the anchor device determines to communicate with a certain target device according to a preset rule (e.g., based on priority of terminal groups, time order of trigger arrival and so on), and abandons communication with other target devices.
   ② Alternatively, when the target device triggers the anchor device to communicate, the target device allows the anchor device to communicate within a time window. When triggers from multiple target devices collide, the anchor device communicates with different target devices in a time-division manner according to the time window indicated by the target device. It is required to be determined in combination with the energy state. When the target device conflicts cannot be resolved, the anchor device determines to communicate with a certain target device according to a preset rule, and abandons communication with other target devices.
   ③ Alternatively, when the target device triggers the anchor device to perform backscattering communication, the target device indicates at least two time-domain offsets, or at least two communication times. When triggers from multiple target devices collide, the anchor device selects a corresponding time unit to communicate according to the indication information of the target device.

In operation 902, the positioning device obtains a distance between the positioning device and the ambient Internet of Things device according to the positioning signal.

In some embodiments, the operation that the positioning device obtains the distance between the positioning device and the ambient Internet of Things device according to the positioning signal includes: obtaining, by the positioning device, the distance between the positioning device and the ambient Internet of Things device according to signal strength of the positioning signal and/or phase information of the positioning signal.

In operation 903, the positioning device positions the positioning device according to the distance between the positioning device and the ambient Internet of Things device.

When the above ambient Internet of Things devices include multiple (e.g., three or more), the positioning device may calculate the position of the positioning device according to the respective distances between the positioning device and the multiple ambient Internet of Things devices as well as the positions of the multiple ambient Internet of Things devices, thereby achieving positioning of the positioning device.

The above solutions of the present application propose a method for Ambient IoT device-assisted positioning. The Ambient IoT, as an anchor device with a known position, communicates with the target device by means of backscattering or active transmission communication. The target device may determine the distance to the anchor device based on the phase information of communication signals of different frequencies of the anchor device (a device with the known position), and then determine the position information of the target device according to the position information of at least three anchor devices.

The above solutions of the present application provide specific design details, including frequency offset control and time-domain offset control methods for anchor device communication; timing processing for multiple anchor devices assisting positioning; and response processing of the anchor device when multiple target devices trigger the same anchor device.

Referring to FIG. 20, a block diagram of a signal processing apparatus provided by an embodiment of the present application is illustrated. The signal processing apparatus has the functions performed by the positioning device in the method illustrated in any one of FIG. 7 to FIG. 9. As illustrated in FIG. 20, the apparatus may include:
a receiving module 2001, configured to receive a positioning signal transmitted by one or more ambient Internet of Things devices; and
a distance obtaining module 2002, configured to obtain a distance between the positioning device and the ambient Internet of Things device according to the positioning signal, where the distance between the positioning device and the ambient Internet of Things device is used for positioning the positioning device.

In some embodiments, the distance obtaining module 2002 is configured to obtain the distance between the positioning device and the ambient Internet of Things device according to signal strength of the positioning signal and/or phase information of the positioning signal.

In some embodiments, the receiving module 2001 is configured to receive a plurality of positioning signals of different frequencies transmitted by each of the one or more ambient Internet of Things devices.

In some embodiments, the positioning signal is a signal transmitted by the ambient Internet of Things device via backscattering based on a carrier signal.

In some embodiments, the carrier signal is transmitted by the positioning device; or the carrier signal is transmitted by a third-party device other than the positioning device and the ambient Internet of Things device.

In some embodiments, in a case where the carrier signal is transmitted by the positioning device:
the carrier signal and a trigger signal are the same signal, where the trigger signal is a signal transmitted by the positioning device, and the trigger signal is used to trigger the ambient Internet of Things device to transmit the positioning signal; or
the carrier signal and a trigger signal are different signals.

In some embodiments, in a case where the carrier signal and the trigger signal are different signals, there is a time offset between a start time point of the carrier signal and a start time point of the trigger signal.

In some embodiments, in a case where the carrier signal is transmitted by the third-party device other than the positioning device and the ambient Internet of Things device:
the carrier signal is transmitted periodically by the third-party device; or
the carrier signal is transmitted by the third-party device under control of the positioning device.

In some embodiments, the carrier signal includes a plurality of first carrier signals of different frequencies transmitted simultaneously, and the positioning signal includes a plurality of first positioning signals of different frequencies that are in a one-to-one correspondence with the plurality of first carrier signals of different frequencies; and/or
the carrier signal includes a plurality of second carrier signals of different frequencies transmitted in a time-division manner, and the positioning signal includes a plurality of second positioning signals of different frequencies that are in a one-to-one correspondence with the plurality of second carrier signals of different frequencies.

In some embodiments, in a case where the carrier signal includes the plurality of second carrier signals of different frequencies transmitted in the time-division manner, the plurality of second carrier signals of different frequencies are a plurality of signals transmitted within a first time window.

In some embodiments, a length of the first time window is determined by the positioning device; or a length of the first time window is defined by a protocol; or the first time window is determined by the ambient Internet of Things device.

In some embodiments, a frequency of the positioning signal is the same as a frequency of the carrier signal reflected by the positioning signal; or there is a frequency offset between a frequency of the positioning signal and a frequency of the carrier signal reflected by the positioning signal.

In some embodiments, in a case where there is the frequency offset between the frequency of the positioning signal and the frequency of the carrier signal reflected by the positioning signal: a value of the frequency offset is defined by a protocol; or a value of the frequency offset is associated with the ambient Internet of Things device; or a value of the frequency offset is indicated by the positioning device to the ambient Internet of Things device.

In some embodiments, the apparatus further includes: a first transmitting module, configured to transmit first indication information to the ambient Internet of Things device, where the first indication information is used to indicate whether there is a frequency offset between the frequency of the positioning signal and the frequency of the carrier signal reflected by the positioning signal.

In some embodiments, the carrier signal includes a single third carrier signal, and the positioning signal includes a plurality of third positioning signals of different frequencies that are determined based on a frequency of the third carrier signal.

In some embodiments, frequency offsets between the third positioning signals and the third carrier signal are defined by a protocol; or frequency offsets between the third positioning signals and the third carrier signal are determined by the ambient Internet of Things device; or frequency offsets between the third positioning signals and the third carrier signal are determined and indicated to the ambient Internet of Things device by the positioning device.

In some embodiments, the third positioning signals are used to carry modulation information; or the third positioning signals are not used to carry modulation information.

In some embodiments, in a case where the third positioning signals are used to carry modulation information: the plurality of third positioning signals of different frequencies are used to carry same modulation information; or the plurality of third positioning signals of different frequencies are used to carry different modulation information.

In some embodiments, there is a time-domain offset between a time at which the ambient Internet of Things device receives the carrier signal and a time at which the ambient Internet of Things device transmits the positioning signal via backscattering based on the carrier signal.

In some embodiments, a value of the time-domain offset is defined by a protocol; or a value of the time-domain offset is determined by the ambient Internet of Things device; or a value of the time-domain offset is determined and indicated to the ambient Internet of Things device by the positioning device.

In some embodiments, the positioning signal is a signal transmitted by the ambient Internet of Things device by means of low-power active transmission.

In some embodiments, the positioning signal includes a plurality of fourth positioning signals of different frequencies that respectively correspond to a plurality of trigger signals, where the trigger signals are signals transmitted by the positioning device, and the trigger signals are used to trigger the ambient Internet of Things device to transmit the positioning signal; or the positioning signal includes a plurality of fifth positioning signals of different frequencies that correspond to a single trigger signal.

In some embodiments, in a case where the positioning signal includes the plurality of fourth positioning signals: frequency-domain positions of the fourth positioning signals are indicated by the positioning device; or frequency-domain offsets between frequency-domain positions of the fourth positioning signals and frequency-domain positions of the trigger signals corresponding to the fourth positioning signals are indicated by the positioning device; or frequency-domain positions of the fourth positioning signals are the same as frequency-domain positions of the trigger signals corresponding to the fourth positioning signals; or frequency-domain offsets between frequency-domain positions of the fourth positioning signals and frequency-domain positions of the trigger signals corresponding to the fourth positioning signals are defined by a protocol.

In some embodiments, in a case where the positioning signal includes the plurality of fourth positioning signals, the plurality of trigger signals are a plurality of signals transmitted within a second time window.

In some embodiments, in a case where the positioning signal includes the plurality of fifth positioning signals, the trigger signal is further used to indicate the following information: frequency-domain positions of the fifth positioning signals; or frequency-domain offsets between frequency-domain positions of the fifth positioning signals and a frequency-domain position of the trigger signal; or a time window in which the plurality of fifth positioning signals are located; or an initial frequency-domain position among frequency-domain positions of the plurality of fifth positioning signals, and a frequency hopping interval between the frequency-domain positions of the plurality of fifth positioning signals.

In some embodiments, the plurality of fourth positioning signals or the plurality of fifth positioning signals are signals transmitted by the ambient Internet of Things device in a time-division manner.

In some embodiments, the plurality of fourth positioning signals or the plurality of fifth positioning signals are a plurality of signals transmitted within a third time window.

In some embodiments, the third time window is determined by the ambient Internet of Things device; or a length of the third time window is defined by a protocol.

In some embodiments, time offset amounts between the plurality of fourth positioning signals or the plurality of fifth positioning signals and the trigger signal(s) are a fixed value; or time offset amounts between the plurality of fourth positioning signals or the plurality of fifth positioning signals and the trigger signal(s) are determined by the ambient Internet of Things device; or time offset amounts between the plurality of fourth positioning signals or the plurality of fifth positioning signals and the trigger signal(s) are indicated by the positioning device.

In some embodiments, in a case where the time offset amounts between the plurality of fourth positioning signals or the plurality of fifth positioning signals and the trigger signal(s) are indicated by the positioning device, the trigger signal(s) are further used to indicate the following information: the time offset amounts between the plurality of fourth positioning signals or the plurality of fifth positioning signals and the trigger signal(s); or a time window for transmitting the plurality of fourth positioning signals or the plurality of fifth positioning signals; or a time offset amount between a latest transmission time of the plurality of fourth positioning signals or the plurality of fifth positioning signals and the trigger signal(s).

In some embodiments, the apparatus further includes: a second transmitting module, configured to transmit a trigger signal simultaneously to a plurality of ambient Internet of Things devices by means of broadcasting or multicasting, where the trigger signal is used to trigger the ambient Internet of Things device to transmit the positioning signal; or transmit a trigger signal to the ambient Internet of Things device by means of unicasting.

In some embodiments, in a case of transmitting the trigger signal simultaneously to the plurality of ambient Internet of Things devices by means of broadcasting or multicasting, the positioning signal includes information associated with a location of the ambient Internet of Things device;
where the information associated with the location of the ambient Internet of Things device includes: an identifier of the ambient Internet of Things device, and/or location information of the ambient Internet of Things device.

In some embodiments, the apparatus further includes: a third transmitting module, configured to indicate time information for transmitting the positioning signal to the ambient Internet of Things device when transmitting the trigger signal, to enable the ambient Internet of Things device to transmit the positioning signal to a plurality of devices in a time-division manner in a case where the ambient Internet of Things device simultaneously receives the trigger signal transmitted by the plurality of devices, where the plurality of devices include the positioning device.

In some embodiments, the time information includes: a transmission time window, a plurality of time-domain offset amounts between reception time points of the trigger signal and transmission time points of the positioning signal, and a plurality of transmission time points of the positioning signal.

In some embodiments, the apparatus further includes: a fourth transmitting module, configured to indicate, when transmitting the trigger signal, to the ambient Internet of Things device to transmit identification information of the positioning device, where the positioning signal includes the identification information of the positioning device.

In some embodiments, a manner of obtaining energy for the ambient Internet of Things device to transmit the positioning signal includes one or more of the following: harvesting ambient energy other than radio frequency signals; harvesting energy from a first radio frequency signal transmitted by the positioning device; or harvesting energy from a second radio frequency signal transmitted by a third-party device.

In some embodiments, in a case where the manner of obtaining the energy for the ambient Internet of Things device to transmit the positioning signal includes harvesting energy from the first radio frequency signal transmitted by the positioning device,
the first radio frequency signal and a trigger signal are the same signal, where the trigger signal is a signal transmitted by the positioning device, and the trigger signal is used to trigger the ambient Internet of Things device to transmit the positioning signal; or
in a case where the positioning signal is a signal transmitted by the ambient Internet of Things device via backscattering based on a carrier signal, the first radio frequency signal and the carrier signal are the same signal; or
the first radio frequency signal is a signal other than the trigger signal and the carrier signal.

In some embodiments, in a case where the manner of obtaining the energy for the ambient Internet of Things device to transmit the positioning signal includes harvesting energy from the second radio frequency signal transmitted by the third-party device:
the second radio frequency signal is transmitted periodically by the third-party device; or the second radio frequency signal is transmitted by the third-party device under control of the positioning device.

Referring to FIG. 21, a block diagram of a signal processing apparatus provided by an embodiment of the present application is illustrated. The signal processing apparatus has the functions performed by the Ambient Internet of Things device in the method illustrated in any one of FIG. 7 to FIG. 9. As illustrated in FIG. 21, the apparatus may include:
a transmitting module 2101, configured to transmit a positioning signal to a positioning device, to enable the positioning device to obtain a distance between the positioning device and an ambient Internet of Things device according to the positioning signal, where the distance between the positioning device and the ambient Internet of Things device is used for positioning the positioning device.

In some embodiments, the transmitting module 2101 is configured to transmit a plurality of positioning signals of different frequencies to the positioning device.

In some embodiments, the positioning signal is a signal transmitted by the ambient Internet of Things device via backscattering based on a carrier signal.

In some embodiments, the carrier signal is transmitted by the positioning device; or the carrier signal is transmitted by a third-party device other than the positioning device and the ambient Internet of Things device.

In some embodiments, in a case where the carrier signal is transmitted by the positioning device: the carrier signal and a trigger signal are the same signal, where the trigger signal is a signal transmitted by the positioning device, and the trigger signal is used to trigger the ambient Internet of Things device to transmit the positioning signal; or the carrier signal and a trigger signal are different signals.

In some embodiments, in a case where the carrier signal and the trigger signal are different signals, there is a time offset between a start time point of the carrier signal and a start time point of the trigger signal.

In some embodiments, in a case where the carrier signal is transmitted by the third-party device other than the positioning device and the ambient Internet of Things device: the carrier signal is transmitted periodically by the third-party device; or the carrier signal is transmitted by the third-party device under control of the positioning device.

In some embodiments, the carrier signal includes a plurality of first carrier signals of different frequencies transmitted simultaneously, and the positioning signal includes a plurality of first positioning signals of different frequencies that are in a one-to-one correspondence with the plurality of first carrier signals of different frequencies; and/or the carrier signal includes a plurality of second carrier signals of different frequencies transmitted in a time-division manner, and the positioning signal includes a plurality of second positioning signals of different frequencies that are in a one-to-one correspondence with the plurality of second carrier signals of different frequencies.

In some embodiments, in a case where the carrier signal includes the plurality of second carrier signals of different frequencies transmitted in the time-division manner, the plurality of second carrier signals of different frequencies are a plurality of signals transmitted within a first time window.

In some embodiments, a length of the first time window is determined by the positioning device; or a length of the first time window is defined by a protocol; or the first time window is determined by the ambient Internet of Things device.

In some embodiments, a frequency of the positioning signal is the same as a frequency of the carrier signal reflected by the positioning signal; or there is a frequency offset between a frequency of the positioning signal and a frequency of the carrier signal reflected by the positioning signal.

In some embodiments, in a case where there is the frequency offset between the frequency of the positioning signal and the frequency of the carrier signal reflected by the positioning signal: a value of the frequency offset is defined by a protocol; or a value of the frequency offset is associated with the ambient Internet of Things device; or a value of the frequency offset is indicated by the positioning device to the ambient Internet of Things device.

In some embodiments, the apparatus further includes: a first receiving module, configured to receive first indication information transmitted by the positioning device, where the first indication information is used to indicate whether there is a frequency offset between the frequency of the positioning signal and the frequency of the carrier signal reflected by the positioning signal.

In some embodiments, the carrier signal includes a single third carrier signal, and the positioning signal includes a plurality of third positioning signals of different frequencies that are determined based on a frequency of the third carrier signal.

In some embodiments, frequency offsets between the third positioning signals and the third carrier signal are defined by a protocol; or frequency offsets between the third positioning signals and the third carrier signal are determined by the ambient Internet of Things device; or frequency offsets between the third positioning signals and the third carrier signal are determined and indicated to the ambient Internet of Things device by the positioning device.

In some embodiments, the third positioning signals are used to carry modulation information; or the third positioning signals are not used to carry modulation information.

In some embodiments, in a case where the third positioning signals are used to carry modulation information: the plurality of third positioning signals of different frequencies are used to carry same modulation information; or the plurality of third positioning signals of different frequencies are used to carry different modulation information.

In some embodiments, there is a time-domain offset between a time at which the ambient Internet of Things device receives the carrier signal and a time at which the ambient Internet of Things device transmits the positioning signal via backscattering based on the carrier signal.

In some embodiments, a value of the time-domain offset is defined by a protocol; or a value of the time-domain offset is determined by the ambient Internet of Things device; or a value of the time-domain offset is determined and indicated to the ambient Internet of Things device by the positioning device.

In some embodiments, the positioning signal is a signal transmitted by the ambient Internet of Things device by means of low-power active transmission.

In some embodiments, the positioning signal includes a plurality of fourth positioning signals of different frequencies that respectively correspond to a plurality of trigger signals, where the trigger signals are signals transmitted by the positioning device, and the trigger signals are used to trigger the ambient Internet of Things device to transmit the positioning signal; or the positioning signal includes a plurality of fifth positioning signals of different frequencies that correspond to a single trigger signal.

In some embodiments, in a case where the positioning signal includes the plurality of fourth positioning signals: frequency-domain positions of the fourth positioning signals are indicated by the positioning device; or frequency-domain offsets between frequency-domain positions of the fourth positioning signals and frequency-domain positions of the trigger signals corresponding to the fourth positioning signals are indicated by the positioning device; or frequency-domain positions of the fourth positioning signals are the same as frequency-domain positions of the trigger signals corresponding to the fourth positioning signals; or frequency-domain offsets between frequency-domain positions of the fourth positioning signals and frequency-domain positions of the trigger signals corresponding to the fourth positioning signals are defined by a protocol.

In some embodiments, in a case where the positioning signal includes the plurality of fourth positioning signals, the plurality of trigger signals are a plurality of signals transmitted within a second time window.

In some embodiments, in a case where the positioning signal includes the plurality of fifth positioning signals, the trigger signal is further used to indicate the following information: frequency-domain positions of the fifth positioning signals; or frequency-domain offsets between frequency-domain positions of the fifth positioning signals and a frequency-domain position of the trigger signal; or a time window in which the plurality of fifth positioning signals are located; or an initial frequency-domain position among frequency-domain positions of the plurality of fifth positioning signals, and a frequency hopping interval between the frequency-domain positions of the plurality of fifth positioning signals.

In some embodiments, the plurality of fourth positioning signals or the plurality of fifth positioning signals are signals transmitted by the ambient Internet of Things device in a time-division manner.

In some embodiments, the plurality of fourth positioning signals or the plurality of fifth positioning signals are a plurality of signals transmitted within a third time window.

In some embodiments, the third time window is determined by the ambient Internet of Things device; or a length of the third time window is defined by a protocol.

In some embodiments, time offset amounts between the plurality of fourth positioning signals or the plurality of fifth positioning signals and the trigger signal(s) are a fixed value; or time offset amounts between the plurality of fourth positioning signals or the plurality of fifth positioning signals and the trigger signal(s) are determined by the ambient Internet of Things device; or time offset amounts between the plurality of fourth positioning signals or the plurality of fifth positioning signals and the trigger signal(s) are indicated by the positioning device.

In some embodiments, in a case where the time offset amounts between the plurality of fourth positioning signals or the plurality of fifth positioning signals and the trigger signal(s) are indicated by the positioning device, the trigger signal(s) are further used to indicate the following information: the time offset amounts between the plurality of fourth positioning signals or the plurality of fifth positioning signals and the trigger signal(s); or a time window for transmitting the plurality of fourth positioning signals or the plurality of fifth positioning signals; or a time offset amount between a latest transmission time of the plurality of fourth positioning signals or the plurality of fifth positioning signals and the trigger signal(s).

In some embodiments, the apparatus further includes: a second receiving module, configured to receive a trigger signal transmitted by the positioning device simultaneously to a plurality of ambient Internet of Things devices by means of broadcasting or multicasting, where the trigger signal is used to trigger the ambient Internet of Things device to transmit the positioning signal; or receive a trigger signal transmitted by the positioning device to the ambient Internet of Things device by means of unicasting.

In some embodiments, in a case of receiving the trigger signal transmitted by the positioning device simultaneously to the plurality of ambient Internet of Things devices by means of broadcasting or multicasting, the positioning signal includes information associated with a location of the ambient Internet of Things device; where the information associated with the location of the ambient Internet of Things device includes: an identifier of the ambient Internet of Things device, and/or location information of the ambient Internet of Things device.

In some embodiments, the apparatus further includes:
a third receiving module, configured to receive time information for transmitting the positioning signal indicated by the positioning device when the positioning device transmits the trigger signal; and
the transmitting module is configured to transmit, according to the time information, the positioning signal to a plurality of devices in a time-division manner in a case of simultaneously receiving the trigger signal transmitted by the plurality of devices, where the plurality of devices include the positioning device.

In some embodiments, the time information includes: a transmission time window, a plurality of time-domain offset amounts between reception time points of the trigger signal and transmission time points of the positioning signal, and a plurality of transmission time points of the positioning signal.

In some embodiments, the apparatus further includes: a fourth receiving module, configured to receive an indication from the positioning device to transmit identification information of the positioning device when the positioning device transmits the trigger signal, where the positioning signal includes the identification information of the positioning device.

In some embodiments, a manner of obtaining energy for the ambient Internet of Things device to transmit the positioning signal includes one or more of the following: harvesting ambient energy other than radio frequency signals; harvesting energy from a first radio frequency signal transmitted by the positioning device; or harvesting energy from a second radio frequency signal transmitted by a third-party device.

In some embodiments, in a case where the manner of obtaining the energy for the ambient Internet of Things device to transmit the positioning signal includes harvesting energy from the first radio frequency signal transmitted by the positioning device, the first radio frequency signal and a trigger signal are the same signal, where the trigger signal is a signal transmitted by the positioning device, and the trigger signal is used to trigger the ambient Internet of Things device to transmit the positioning signal; or in a case where the positioning signal is a signal transmitted by the ambient Internet of Things device via backscattering based on a carrier signal, the first radio frequency signal and the carrier signal are the same signal; or the first radio frequency signal is a signal other than the trigger signal and the carrier signal.

In some embodiments, in a case where the manner of obtaining the energy for the ambient Internet of Things device to transmit the positioning signal includes harvesting energy from the second radio frequency signal transmitted by the third-party device: the second radio frequency signal is transmitted periodically by the third-party device; or the second radio frequency signal is transmitted by the third-party device under control of the positioning device.

It should be noted that, when implementing its functions, the apparatuses provided in the above embodiments are described only by using the division of the above functional modules as an example. In practical applications, the above functions may be allocated to different functional modules for completion as needed, that is, dividing the internal structure of the device into different functional modules to complete all or part of the functions described above.

Regarding the apparatuses in the above embodiments, the specific manner in which each module performs operations has been described in detail in the embodiments of the related method, and thus will not be repeated here.

Referring to FIG. 22, a schematic structural diagram of a communication device 2200 provided by an embodiment of the present application is illustrated. The communication device 2200 may include: a processor 2201, a receiver 2202, a transmitter 2203, a memory 2204 and a bus 2205.

The processor 2201 includes one or more processing cores. The processor 2201 is configured to execute various functional applications and information processing by invoking software programs and modules.

The receiver 2202 and the transmitter 2203 may be implemented as a communication component, and the communication component may be a communication chip. The communication chip may also be referred to as a transceiver. The memory 2204 is connected to the processor 2201 via the bus 2205. The memory 2204 may be configured to store a computer program, and the processor 2201 is configured to execute the computer program to implement the various operations in the above method embodiments.

In addition, the memory 2204 may be implemented by any type of volatile or non-volatile storage device or a combination thereof. The volatile or non-volatile storage device includes, but not limited to, a magnetic disk or an optical disc, an electrically erasable programmable read-only memory, an erasable programmable read-only memory, a static random-access memory, a read-only memory, a magnetic memory, a flash memory, or a programmable read-only memory.

In an exemplary scheme, when the communication device 2200 is implemented as the above positioning device, the receiver 2202 and the processor 2201 execute the computer program, to enable the communication device to implement the various steps performed by the positioning device in the methods illustrated in FIG. 7 to FIG. 9.

In an exemplary scheme, when the communication device 2200 is implemented as the above ambient Internet of Things device, the transmitter 2203 executes the computer program, to enable the communication device to implement the various steps performed by the Ambient Internet of Things device in the methods illustrated in FIG. 7 to FIG. 9.

The embodiments of the present application further provide a computer-readable storage medium. The computer program is stored in the storage medium, and the computer program is loaded and executed by a processor to implement all or part of the steps performed by the positioning device or the ambient Internet of Things device in the methods illustrated in FIG. 7 to FIG. 9.

The present application further provides a chip. The chip is configured to operate in a communication device, so as to enable the communication device to execute all or part of the steps performed by the positioning device or the ambient Internet of Things device in the methods illustrated in FIG. 7 to FIG. 9.

The present application further provides a computer program product. The computer program product or the computer program includes computer instructions, and the computer instructions are stored in a computer-readable storage medium. A processor of a communication device reads the computer instructions from the computer-readable storage medium, and the processor executes the computer instructions, to enable the communication device to execute all or part of the steps performed by the positioning device or the ambient Internet of Things device in the methods illustrated in FIG. 7 to FIG. 9.

The present application further provides a computer program. The computer program is executed by a processor of a communication device, to implement all or part of the steps performed by the positioning device or the ambient Internet of Things device in the methods illustrated in FIG. 7 to FIG. 9.

Those skilled in the art should appreciate that in the one or more of the above examples, the functions described in the embodiments of the present application may be implemented in hardware, software, firmware or any combination thereof. When implemented in software, the functions may be stored on a computer-readable medium or transmitted as one or more instructions or codes on the computer-readable medium. The computer-readable medium includes both a computer storage medium and a communication medium, where the communication medium includes any medium that facilitates the transfer of a computer program from one place to another. The storage medium may be any available medium that can be accessed by a general-purpose or special-purpose computer.

The foregoing descriptions are merely exemplary embodiments of the present application and are not intended to limit the present application. Any modifications, equivalent substitutions, improvements or the like made within the spirit and principles of the present application shall fall within the scope of protection of the present application.

## Claims

1. A signal processing method, wherein the method is performed by a positioning device and comprises:
receiving a positioning signal transmitted by one or more ambient Internet of Things devices; and
obtaining a distance between the positioning device and the ambient Internet of Things device according to the positioning signal, wherein the distance between the positioning device and the ambient Internet of Things device is used for positioning the positioning device.

2. The method according to claim 1, wherein obtaining the distance between the positioning device and the ambient Internet of Things device according to the positioning signal comprises:
obtaining the distance between the positioning device and the ambient Internet of Things device according to signal strength of the positioning signal and/or phase information of the positioning signal.

3. The method according to claim 1 or 2, wherein receiving the positioning signal transmitted by the one or more ambient Internet of Things devices comprises:
receiving a plurality of positioning signals of different frequencies transmitted by each of the one or more ambient Internet of Things devices.

4. The method according to any one of claims 1 to 3, wherein the positioning signal is a signal transmitted by the ambient Internet of Things device via backscattering based on a carrier signal.

5. The method according to claim 4, wherein
the carrier signal is transmitted by the positioning device; or
the carrier signal is transmitted by a third-party device other than the positioning device and the ambient Internet of Things device.

6. The method according to claim 5, wherein in a case where the carrier signal is transmitted by the positioning device:
the carrier signal and a trigger signal are the same signal, wherein the trigger signal is a signal transmitted by the positioning device, and the trigger signal is used to trigger the ambient Internet of Things device to transmit the positioning signal; or
the carrier signal and a trigger signal are different signals.

7. The method according to claim 6, wherein in a case where the carrier signal and the trigger signal are different signals, there is a time offset between a start time point of the carrier signal and a start time point of the trigger signal.

8. The method according to claim 5, wherein in a case where the carrier signal is transmitted by the third-party device other than the positioning device and the ambient Internet of Things device:
the carrier signal is transmitted periodically by the third-party device; or
the carrier signal is transmitted by the third-party device under control of the positioning device.

9. The method according to any one of claims 4 to 8, wherein
the carrier signal comprises a plurality of first carrier signals of different frequencies transmitted simultaneously, and the positioning signal comprises a plurality of first positioning signals of different frequencies that are in a one-to-one correspondence with the plurality of first carrier signals of different frequencies;
and/or
the carrier signal comprises a plurality of second carrier signals of different frequencies transmitted in a time-division manner, and the positioning signal comprises a plurality of second positioning signals of different frequencies that are in a one-to-one correspondence with the plurality of second carrier signals of different frequencies.

10. The method according to claim 9, wherein in a case where the carrier signal comprises the plurality of second carrier signals of different frequencies transmitted in the time-division manner, the plurality of second carrier signals of different frequencies are a plurality of signals transmitted within a first time window.

11. The method according to claim 10, wherein
a length of the first time window is determined by the positioning device; or
a length of the first time window is defined by a protocol; or
the first time window is determined by the ambient Internet of Things device.

12. The method according to any one of claims 9 to 11, wherein
a frequency of the positioning signal is the same as a frequency of the carrier signal reflected by the positioning signal;
or
there is a frequency offset between a frequency of the positioning signal and a frequency of the carrier signal reflected by the positioning signal.

13. The method according to claim 12, wherein in a case where there is the frequency offset between the frequency of the positioning signal and the frequency of the carrier signal reflected by the positioning signal:
a value of the frequency offset is defined by a protocol; or
a value of the frequency offset is associated with the ambient Internet of Things device; or
a value of the frequency offset is indicated by the positioning device to the ambient Internet of Things device.

14. The method according to claim 12 or 13, wherein the method further comprises:
transmitting first indication information to the ambient Internet of Things device, wherein the first indication information is used to indicate whether there is a frequency offset between the frequency of the positioning signal and the frequency of the carrier signal reflected by the positioning signal.

15. The method according to any one of claims 4 to 8, wherein the carrier signal comprises a single third carrier signal, and the positioning signal comprises a plurality of third positioning signals of different frequencies that are determined based on a frequency of the third carrier signal.

16. The method according to claim 15, wherein
frequency offsets between the third positioning signals and the third carrier signal are defined by a protocol; or
frequency offsets between the third positioning signals and the third carrier signal are determined by the ambient Internet of Things device; or
frequency offsets between the third positioning signals and the third carrier signal are determined and indicated to the ambient Internet of Things device by the positioning device.

17. The method according to claim 15 or 16, wherein the third positioning signals are used to carry modulation information; or the third positioning signals are not used to carry modulation information.

18. The method according to claim 17, wherein in a case where the third positioning signals are used to carry modulation information:
the plurality of third positioning signals of different frequencies are used to carry same modulation information;
or
the plurality of third positioning signals of different frequencies are used to carry different modulation information.

19. The method according to any one of claims 4 to 18, wherein
there is a time-domain offset between a time at which the ambient Internet of Things device receives the carrier signal and a time at which the ambient Internet of Things device transmits the positioning signal via backscattering based on the carrier signal.

20. The method according to claim 19, wherein
a value of the time-domain offset is defined by a protocol; or
a value of the time-domain offset is determined by the ambient Internet of Things device; or
a value of the time-domain offset is determined and indicated to the ambient Internet of Things device by the positioning device.

21. The method according to any one of claims 1 to 3, wherein the positioning signal is a signal transmitted by the ambient Internet of Things device by means of low-power active transmission.

22. The method according to claim 21, wherein
the positioning signal comprises a plurality of fourth positioning signals of different frequencies that respectively correspond to a plurality of trigger signals, wherein the trigger signals are signals transmitted by the positioning device, and the trigger signals are used to trigger the ambient Internet of Things device to transmit the positioning signal;
or
the positioning signal comprises a plurality of fifth positioning signals of different frequencies that correspond to a single trigger signal.

23. The method according to claim 22, wherein in a case where the positioning signal comprises the plurality of fourth positioning signals:
frequency-domain positions of the fourth positioning signals are indicated by the positioning device; or
frequency-domain offsets between frequency-domain positions of the fourth positioning signals and frequency-domain positions of the trigger signals corresponding to the fourth positioning signals are indicated by the positioning device; or
frequency-domain positions of the fourth positioning signals are the same as frequency-domain positions of the trigger signals corresponding to the fourth positioning signals; or
frequency-domain offsets between frequency-domain positions of the fourth positioning signals and frequency-domain positions of the trigger signals corresponding to the fourth positioning signals are defined by a protocol.

24. The method according to claim 22 or 23, wherein in a case where the positioning signal comprises the plurality of fourth positioning signals:
the plurality of trigger signals are a plurality of signals transmitted within a second time window.

25. The method according to claim 22, wherein in a case where the positioning signal comprises the plurality of fifth positioning signals, the trigger signal is further used to indicate the following information:
frequency-domain positions of the fifth positioning signals; or
frequency-domain offsets between frequency-domain positions of the fifth positioning signals and a frequency-domain position of the trigger signal; or
a time window in which the plurality of fifth positioning signals are located; or
an initial frequency-domain position among frequency-domain positions of the plurality of fifth positioning signals, and a frequency hopping interval between the frequency-domain positions of the plurality of fifth positioning signals.

26. The method according to any one of claims 22 to 25, wherein
the plurality of fourth positioning signals or the plurality of fifth positioning signals are signals transmitted by the ambient Internet of Things device in a time-division manner.

27. The method according to claim 26, wherein the plurality of fourth positioning signals or the plurality of fifth positioning signals are a plurality of signals transmitted within a third time window.

28. The method according to claim 27, wherein
the third time window is determined by the ambient Internet of Things device; or
a length of the third time window is defined by a protocol.

29. The method according to any one of claims 22 to 25, wherein
time offset amounts between the plurality of fourth positioning signals or the plurality of fifth positioning signals and the trigger signal(s) are a fixed value; or
time offset amounts between the plurality of fourth positioning signals or the plurality of fifth positioning signals and the trigger signal(s) are determined by the ambient Internet of Things device; or
time offset amounts between the plurality of fourth positioning signals or the plurality of fifth positioning signals and the trigger signal(s) are indicated by the positioning device.

30. The method according to claim 29, wherein in a case where the time offset amounts between the plurality of fourth positioning signals or the plurality of fifth positioning signals and the trigger signal(s) are indicated by the positioning device, the trigger signal(s) are further used to indicate the following information:
the time offset amounts between the plurality of fourth positioning signals or the plurality of fifth positioning signals and the trigger signal(s); or
a time window for transmitting the plurality of fourth positioning signals or the plurality of fifth positioning signals; or
a time offset amount between a latest transmission time of the plurality of fourth positioning signals or the plurality of fifth positioning signals and the trigger signal(s).

31. The method according to any one of claims 1 to 30, wherein the method further comprises:
transmitting a trigger signal simultaneously to a plurality of ambient Internet of Things devices by means of broadcasting or multicasting, wherein the trigger signal is used to trigger the ambient Internet of Things device to transmit the positioning signal;
or
transmitting a trigger signal to the ambient Internet of Things device by means of unicasting.

32. The method according to claim 31, wherein in a case of transmitting the trigger signal simultaneously to the plurality of ambient Internet of Things devices by means of broadcasting or multicasting, the positioning signal comprises information associated with a location of the ambient Internet of Things device;
wherein the information associated with the location of the ambient Internet of Things device comprises: an identifier of the ambient Internet of Things device, and/or location information of the ambient Internet of Things device.

33. The method according to claim 31 or 32, wherein the method further comprises:
indicating time information for transmitting the positioning signal to the ambient Internet of Things device when transmitting the trigger signal, to enable the ambient Internet of Things device to transmit the positioning signal to a plurality of devices in a time-division manner in a case where the ambient Internet of Things device simultaneously receives the trigger signal transmitted by the plurality of devices, wherein the plurality of devices comprise the positioning device.

34. The method according to claim 33, wherein the time information comprises:
a transmission time window, a plurality of time-domain offset amounts between reception time points of the trigger signal and transmission time points of the positioning signal, and a plurality of transmission time points of the positioning signal.

35. The method according to claim 31 or 32, wherein the method further comprises:
when transmitting the trigger signal, indicating to the ambient Internet of Things device to transmit identification information of the positioning device, wherein the positioning signal comprises the identification information of the positioning device.

36. The method according to any one of claims 1 to 35, wherein a manner of obtaining energy for the ambient Internet of Things device to transmit the positioning signal comprises one or more of the following:
harvesting ambient energy other than radio frequency signals;
harvesting energy from a first radio frequency signal transmitted by the positioning device; or
harvesting energy from a second radio frequency signal transmitted by a third-party device.

37. The method according to claim 36, wherein in a case where the manner of obtaining the energy for the ambient Internet of Things device to transmit the positioning signal comprises harvesting energy from the first radio frequency signal transmitted by the positioning device,
the first radio frequency signal and a trigger signal are the same signal, wherein the trigger signal is a signal transmitted by the positioning device, and the trigger signal is used to trigger the ambient Internet of Things device to transmit the positioning signal; or
in a case where the positioning signal is a signal transmitted by the ambient Internet of Things device via backscattering based on a carrier signal, the first radio frequency signal and the carrier signal are the same signal; or
the first radio frequency signal is a signal other than the trigger signal and the carrier signal.

38. The method according to claim 36 or 37, wherein in a case where the manner of obtaining the energy for the ambient Internet of Things device to transmit the positioning signal comprises harvesting energy from the second radio frequency signal transmitted by the third-party device:
the second radio frequency signal is transmitted periodically by the third-party device; or
the second radio frequency signal is transmitted by the third-party device under control of the positioning device.

39. A signal processing method, wherein the method is performed by an ambient Internet of Things device and comprises:
transmitting a positioning signal to a positioning device, to enable the positioning device to obtain a distance between the positioning device and the ambient Internet of Things device according to the positioning signal, wherein the distance between the positioning device and the ambient Internet of Things device is used for positioning the positioning device.

40. The method according to claim 39, wherein transmitting the positioning signal to the positioning device comprises:
transmitting a plurality of positioning signals of different frequencies to the positioning device.

41. The method according to claim 39 or 40, wherein the positioning signal is a signal transmitted by the ambient Internet of Things device via backscattering based on a carrier signal.

42. The method according to claim 41, wherein
the carrier signal is transmitted by the positioning device; or
the carrier signal is transmitted by a third-party device other than the positioning device and the ambient Internet of Things device.

43. The method according to claim 42, wherein in a case where the carrier signal is transmitted by the positioning device:
the carrier signal and a trigger signal are the same signal, wherein the trigger signal is a signal transmitted by the positioning device, and the trigger signal is used to trigger the ambient Internet of Things device to transmit the positioning signal; or
the carrier signal and a trigger signal are different signals.

44. The method according to claim 43, wherein in a case where the carrier signal and the trigger signal are different signals, there is a time offset between a start time point of the carrier signal and a start time point of the trigger signal.

45. The method according to claim 42, wherein in a case where the carrier signal is transmitted by the third-party device other than the positioning device and the ambient Internet of Things device:
the carrier signal is transmitted periodically by the third-party device; or
the carrier signal is transmitted by the third-party device under control of the positioning device.

46. The method according to any one of claims 41 to 45, wherein
the carrier signal comprises a plurality of first carrier signals of different frequencies transmitted simultaneously, and the positioning signal comprises a plurality of first positioning signals of different frequencies that are in a one-to-one correspondence with the plurality of first carrier signals of different frequencies;
and/or
the carrier signal comprises a plurality of second carrier signals of different frequencies transmitted in a time-division manner, and the positioning signal comprises a plurality of second positioning signals of different frequencies that are in a one-to-one correspondence with the plurality of second carrier signals of different frequencies.

47. The method according to claim 46, wherein in a case where the carrier signal comprises the plurality of second carrier signals of different frequencies transmitted in the time-division manner, the plurality of second carrier signals of different frequencies are a plurality of signals transmitted within a first time window.

48. The method according to claim 47, wherein
a length of the first time window is determined by the positioning device; or
a length of the first time window is defined by a protocol; or
the first time window is determined by the ambient Internet of Things device.

49. The method according to any one of claims 46 to 48, wherein
a frequency of the positioning signal is the same as a frequency of the carrier signal reflected by the positioning signal;
or
there is a frequency offset between a frequency of the positioning signal and a frequency of the carrier signal reflected by the positioning signal.

50. The method according to claim 49, wherein in a case where there is the frequency offset between the frequency of the positioning signal and the frequency of the carrier signal reflected by the positioning signal:
a value of the frequency offset is defined by a protocol; or
a value of the frequency offset is associated with the ambient Internet of Things device; or
a value of the frequency offset is indicated by the positioning device to the ambient Internet of Things device.

51. The method according to claim 49 or 50, wherein the method further comprises:
receiving first indication information transmitted by the positioning device, wherein the first indication information is used to indicate whether there is a frequency offset between the frequency of the positioning signal and the frequency of the carrier signal reflected by the positioning signal.

52. The method according to any one of claims 41 to 45, wherein the carrier signal comprises a single third carrier signal, and the positioning signal comprises a plurality of third positioning signals of different frequencies that are determined based on a frequency of the third carrier signal.

53. The method according to claim 52, wherein
frequency offsets between the third positioning signals and the third carrier signal are defined by a protocol; or
frequency offsets between the third positioning signals and the third carrier signal are determined by the ambient Internet of Things device; or
frequency offsets between the third positioning signals and the third carrier signal are determined and indicated to the ambient Internet of Things device by the positioning device.

54. The method according to claim 52 or 53, wherein the third positioning signals are used to carry modulation information; or the third positioning signals are not used to carry modulation information.

55. The method according to claim 54, wherein in a case where the third positioning signals are used to carry modulation information:
the plurality of third positioning signals of different frequencies are used to carry same modulation information;
or
the plurality of third positioning signals of different frequencies are used to carry different modulation information.

56. The method according to any one of claims 41 to 55, wherein
there is a time-domain offset between a time at which the ambient Internet of Things device receives the carrier signal and a time at which the ambient Internet of Things device transmits the positioning signal via backscattering based on the carrier signal.

57. The method according to claim 56, wherein
a value of the time-domain offset is defined by a protocol; or
a value of the time-domain offset is determined by the ambient Internet of Things device; or
a value of the time-domain offset is determined and indicated to the ambient Internet of Things device by the positioning device.

58. The method according to claim 39 or 40, wherein the positioning signal is a signal transmitted by the ambient Internet of Things device by means of low-power active transmission.

59. The method according to claim 58, wherein
the positioning signal comprises a plurality of fourth positioning signals of different frequencies that respectively correspond to a plurality of trigger signals, wherein the trigger signals are signals transmitted by the positioning device, and the trigger signals are used to trigger the ambient Internet of Things device to transmit the positioning signal;
or
the positioning signal comprises a plurality of fifth positioning signals of different frequencies that correspond to a single trigger signal.

60. The method according to claim 59, wherein in a case where the positioning signal comprises the plurality of fourth positioning signals:
frequency-domain positions of the fourth positioning signals are indicated by the positioning device; or
frequency-domain offsets between frequency-domain positions of the fourth positioning signals and frequency-domain positions of the trigger signals corresponding to the fourth positioning signals are indicated by the positioning device; or
frequency-domain positions of the fourth positioning signals are the same as frequency-domain positions of the trigger signals corresponding to the fourth positioning signals; or
frequency-domain offsets between frequency-domain positions of the fourth positioning signals and frequency-domain positions of the trigger signals corresponding to the fourth positioning signals are defined by a protocol.

61. The method according to claim 59 or 60, wherein in a case where the positioning signal comprises the plurality of fourth positioning signals:
the plurality of trigger signals are a plurality of signals transmitted within a second time window.

62. The method according to claim 61, wherein in a case where the positioning signal comprises the plurality of fifth positioning signals, the trigger signal is further used to indicate the following information:
frequency-domain positions of the fifth positioning signals; or
frequency-domain offsets between frequency-domain positions of the fifth positioning signals and a frequency-domain position of the trigger signal; or
a time window in which the plurality of fifth positioning signals are located; or
an initial frequency-domain position among frequency-domain positions of the plurality of fifth positioning signals, and a frequency hopping interval between the frequency-domain positions of the plurality of fifth positioning signals.

63. The method according to any one of claims 59 to 62, wherein
the plurality of fourth positioning signals or the plurality of fifth positioning signals are signals transmitted by the ambient Internet of Things device in a time-division manner.

64. The method according to claim 63, wherein the plurality of fourth positioning signals or the plurality of fifth positioning signals are a plurality of signals transmitted within a third time window.

65. The method according to claim 64, wherein
the third time window is determined by the ambient Internet of Things device; or
a length of the third time window is defined by a protocol.

66. The method according to any one of claims 59 to 62, wherein
time offset amounts between the plurality of fourth positioning signals or the plurality of fifth positioning signals and the trigger signal(s) are a fixed value; or
time offset amounts between the plurality of fourth positioning signals or the plurality of fifth positioning signals and the trigger signal(s) are determined by the ambient Internet of Things device; or
time offset amounts between the plurality of fourth positioning signals or the plurality of fifth positioning signals and the trigger signal(s) are indicated by the positioning device.

67. The method according to claim 66, wherein in a case where the time offset amounts between the plurality of fourth positioning signals or the plurality of fifth positioning signals and the trigger signal(s) are indicated by the positioning device, the trigger signal(s) are further used to indicate the following information:
the time offset amounts between the plurality of fourth positioning signals or the plurality of fifth positioning signals and the trigger signal(s); or
a time window for transmitting the plurality of fourth positioning signals or the plurality of fifth positioning signals; or
a time offset amount between a latest transmission time of the plurality of fourth positioning signals or the plurality of fifth positioning signals and the trigger signal(s).

68. The method according to any one of claims 39 to 67, wherein the method further comprises:
receiving a trigger signal transmitted by the positioning device simultaneously to a plurality of ambient Internet of Things devices by means of broadcasting or multicasting, wherein the trigger signal is used to trigger the ambient Internet of Things device to transmit the positioning signal;
or
receiving a trigger signal transmitted by the positioning device to the ambient Internet of Things device by means of unicasting.

69. The method according to claim 68, wherein in a case of receiving the trigger signal transmitted by the positioning device simultaneously to the plurality of ambient Internet of Things devices by means of broadcasting or multicasting, the positioning signal comprises information associated with a location of the ambient Internet of Things device;
wherein the information associated with the location of the ambient Internet of Things device comprises: an identifier of the ambient Internet of Things device, and/or location information of the ambient Internet of Things device.

70. The method according to claim 68 or 69, wherein the method further comprises:
receiving time information for transmitting the positioning signal indicated by the positioning device when the positioning device transmits the trigger signal; and
transmitting, according to the time information, the positioning signal to a plurality of devices in a time-division manner in a case of simultaneously receiving the trigger signal transmitted by the plurality of devices, wherein the plurality of devices comprise the positioning device.

71. The method according to claim 70, wherein the time information comprises:
a transmission time window, a plurality of time-domain offset amounts between reception time points of the trigger signal and transmission time points of the positioning signal, and a plurality of transmission time points of the positioning signal.

72. The method according to claim 70 or 71, wherein the method further comprises:
receiving an indication from the positioning device to transmit identification information of the positioning device when the positioning device transmits the trigger signal, wherein the positioning signal comprises the identification information of the positioning device.

73. The method according to any one of claims 39 to 72, wherein a manner of obtaining energy for the ambient Internet of Things device to transmit the positioning signal comprises one or more of the following:
harvesting ambient energy other than radio frequency signals;
harvesting energy from a first radio frequency signal transmitted by the positioning device; or
harvesting energy from a second radio frequency signal transmitted by a third-party device.

74. The method according to claim 73, wherein in a case where the manner of obtaining the energy for the ambient Internet of Things device to transmit the positioning signal comprises harvesting energy from the first radio frequency signal transmitted by the positioning device,
the first radio frequency signal and a trigger signal are the same signal, wherein the trigger signal is a signal transmitted by the positioning device, and the trigger signal is used to trigger the ambient Internet of Things device to transmit the positioning signal; or
in a case where the positioning signal is a signal transmitted by the ambient Internet of Things device via backscattering based on a carrier signal, the first radio frequency signal and the carrier signal are the same signal; or
the first radio frequency signal is a signal other than the trigger signal and the carrier signal.

75. The method according to claim 73 or 74, wherein in a case where the manner of obtaining the energy for the ambient Internet of Things device to transmit the positioning signal comprises harvesting energy from the second radio frequency signal transmitted by the third-party device:
the second radio frequency signal is transmitted periodically by the third-party device; or
the second radio frequency signal is transmitted by the third-party device under control of the positioning device.

76. A signal processing apparatus, wherein the apparatus comprises:
a receiving module, configured to receive a positioning signal transmitted by one or more ambient Internet of Things devices; and
a distance obtaining module, configured to obtain a distance between the positioning device and the ambient Internet of Things device according to the positioning signal, wherein the distance between the positioning device and the ambient Internet of Things device is used for positioning the positioning device.

77. A signal processing apparatus, wherein the apparatus comprises:
a transmitting module, configured to transmit a positioning signal to a positioning device, to enable the positioning device to obtain a distance between the positioning device and an ambient Internet of Things device according to the positioning signal, wherein the distance between the positioning device and the ambient Internet of Things device is used for positioning the positioning device.

78. A positioning device, wherein the positioning device comprises a processor, a memory and a transceiver;
the memory is configured to store a computer program, and the processor is configured to execute the computer program, to cause the positioning device to implement the signal processing method according to any one of claims 1 to 38.

79. An ambient Internet of Things device, wherein the ambient Internet of Things device comprises a processor, a memory and a transceiver;
the memory is configured to store a computer program, and the processor is configured to execute the computer program, to cause the ambient Internet of Things device to implement the signal processing method according to any one of claims 39 to 75.

80. A computer-readable storage medium having a computer program stored thereon, wherein the computer program, when executed by a processor of a communication device, to cause the communication device to implement the signal processing method according to any one of claims 1 to 75.

81. A chip, comprising: an integrated circuit and an application program, wherein the chip is configured to operate in a communication device, to cause the communication device to perform the signal processing method according to any one of claims 1 to 75.

82. A computer program product, comprising: computer instructions, wherein the computer instructions are stored on a computer-readable storage medium; and a processor of a communication device reads the computer instructions from the computer-readable storage medium and executes the computer instructions, to cause the communication device to perform the signal processing method according to any one of claims 1 to 75.

83. A computer program, wherein the computer program is executed by a processor of a communication device, to cause the communication device to implement the signal processing method according to any one of claims 1 to 75.
